# EUROPÄISCHE PATENTSCHRIFT

(11) **EP 3 446 799 B1**
(45) Veröffentlichungstag und Bekanntmachung des Hinweises auf die Patenterteilung: **19.05.2021**
(21) Anmeldenummer: 18184648.6
(22) Anmeldetag: 20.07.2018
(51) Int. Cl.: B09B 3/00, F23G 5/027, F23G 5/12

(54) **VERFAHREN ZUR RÜCKGEWINNUNG AUS ABFALLPRODUKTEN**
RECOVERING PROCESS FROM WASTE PRODUCTS
PROCÉDÉ DE RECYCLAGE À PARTIR DE DÉCHETS

(30) Priorität: 25.07.2017 AT 506192017
(43) Veröffentlichungstag der Anmeldung: 27.02.2019
(73) Patentinhaber: Seccon GmbH, 4644 Scharnstein (AT)
(72) Erfinder: SECKLEHNER, Jürgen, 4644 Scharnstein (AT)
(74) Vertreter: Burger, Hannes

(56) Entgegenhaltungen:
- WO-A1-90/00700
- WO-A2-2016/066626
- US-A- 4 774 895
- US-A1- 2006 243 648
- US-A1- 2011 127 470
- US-A1- 2015 020 407

## Beschreibung

Die Erfindung betrifft ein Verfahren zur Rückgewinnung von Wertstoffen aus Abfallprodukten.

Die Rückgewinnung von Wertstoffen, beispielsweise aus gebrauchten Produkten oder Abfall bzw. Abfallprodukten, gewinnt zunehmend an Bedeutung. Für viele Wertstoffe ist hierbei eine materielle Wiederverwertung als Sekundärrohstoff sowohl aus ökologischen als auch aus ökonomischen Gesichtspunkten betrachtet sinnvoll. Dies gilt zum Beispiel für Wertstoffe, welche alternativ sehr aufwendig aus natürlichen Ressourcen gewonnen werden müssen, oder bei welchen bereits eine Ressourcenknappheit besteht.

Eine Herausforderung bei einer Rückgewinnung von Wertstoffen ist allerdings, dass eine große Menge von Gebrauchsgegenständen oder Abfallprodukten aus einer Mehrzahl an Materialien bestehen. Erschwerend kann noch hinzukommen, dass solche verschiedenen Materialien in den Abfällen bzw. Gebrauchsprodukten miteinander in gewissen Ausmaß formschlüssig, oder sogar materialschlüssig verbunden vorliegen. Je nach Beschaffenheit des zu recycelnden Mülls bzw. der zu recycelnden Abfälle oder Gebrauchsgegenstände kann hierdurch ein mehr oder minder großer Aufwand entstehen, um die Wertstoffe von den anderen Bestandteilen abzutrennen.

Vielfach werden zur groben Trennung der verschiedenen Materialien in Abfallprodukten zunächst mechanische Verfahren angewendet. Alternativ oder zusätzlich können je nach Beschaffenheit der Abfallprodukte und/oder der rückzugewinnenden Wertstoffe auch andere Verfahren eingesetzt werden, wie etwa eine magnetische Abtrennung für bestimmte Metalle. Solche anfänglichen Grobaufarbeitungen von Abfallprodukten umfassen häufig auch Zerkleinerungsvorgänge, beispielsweise Schreddern. Als Beispiel sei an dieser Stelle ein mechanisches Abtrennen von Festigkeitsträgern, wie etwa Stahldrähten oder Kunststofffasern aus Altreifen erwähnt.

Nach solchen, allenfalls unter Zerkleinerung durchgeführten Grobaufarbeitungen von Abfallprodukten, fallen häufig noch mehr oder minder stark mit anderen Bestandteilen verunreinigte Abfallprodukte an. Die Verunreinigungen sind hierbei häufig organischer Natur, wie beispielsweise Beschichtungen bzw. Lackierungen, Plastik- oder Gummibestandteile, oder auch biologisches Material. Nachteilig sind in diesem Zusammenhang die Wertminderung bzw. die geringen Erlöse, welche für solche, verunreinigten Abfallprodukten erzielt werden können.

Zur Widerverwertung, insbesondere zur materiellen Widerverwertung der Wertstoffe ist es zumeist erforderlich, die Reinheit der Wertstoffe weiter zu verbessern bzw. zu erhöhen. Um Wertstoffe aus Abfallprodukten möglichst rückstandsfrei zu erhalten, müssen Abfallprodukte mit verunreinigten Wertstoffen oftmals mit hohem Aufwand nachbehandelt werden. Hierbei kommen beispielsweise mechanische Reinigungsverfahren, wie etwa Bürsten, Abschmirgeln oder Abstreifen von Verunreinigungen zum Einsatz. Je nach Sachlage können auch andere Trennverfahren zum Einsatz kommen, wie zum Beispiel Sieben, Sedimentation oder auch chemische Trennverfahren. Grundsätzlich ist es auch bekannt, organische Verunreinigungen von Wertstoffen abzuschwelen oder abzubrennen.

Die bekannten Methoden zur Aufbereitung von Abfallprodukten sind jedoch mit erheblichen Arbeits- und/oder hohem Energieaufwand behaftet. Des Weiteren kommt es bei den bekannten Verfahren durch die Aufbereitung selbst oftmals zu erheblichen Verlusten an Wertstoffen, etwa durch Abrieb oder unvollständige Abtrennung von Verunreinigungen.

Aus US 2015/020407 A1 ist ein Verfahren und eine Vorrichtung zur Aufbereitung von nassem Abfallmaterial enthaltend organische Komponenten bekannt. Einer Trocknungseinheit für das nasse Abfallmaterial wird heißes Abgas von einer Vorheiz-Vorrichtung einer Kalzination einer Zementproduktionsanlage zugeführt. In einer Trennvorrichtung wird das Abgas der Trocknungseinheit von dem getrockneten Abfallmaterial getrennt und einem Wärmetauscher zur Kühlung von abgezweigtem, heißem Abgas zugeführt. Das abgezweigte, gekühlte Abgas kann der Trocknungseinheit zugeführt werden, während das Abgas der Trocknungseinheit nach Durchtritt durch den Wärmetauscher zur Kühlung von Zementklinker eingesetzt und anschließend in die Kalzination eingeleitet wird. Das getrocknete Abfallmaterial wird als Brennstoff für einen Drehrohrofen der Zementproduktionsanlage eingesetzt.

Aus US 4 774 895 A ist eine Vorrichtung und ein Verfahren zur Müll-Pyrolyse bekannt. Die Vorrichtung umfasst einen Pyrolysereaktor und eine nachgeschaltete Müll-Verbrennungsanlage. Der Müll wird zunächst in dem Pyrolysereaktor pyrolysiert und das entstehende Pyrolysegas in der nachgeschalteten Verbrennungsanlage verbrannt. Die Müll-Verbrennungsanlage kann ebenfalls mit Müll zur Verbrennung beaufschlagt werden. Pyrolyse- und Verbrennungsrückstände können aus dem Pyrolyse-Reaktor bzw. der Verbrennungsanlage jeweils entfernt werden. Das verbrannte Gas wird über mehrere Stufen aufbereitet und gereinigt und in die Umgebungsluft abgeleitet, wobei ein Teil des verbrannten Gases abgezweigt und in den Pyrolysereaktor zurückgeführt werden kann.

US 2006/243648 A1 offenbart ein System und ein Verfahren zur Zuführung von Abwärme aus einer Anlage zu einem Verteilungsmodul, und Verteilung der Abwärme auf ein oder mehrere Schlamaufbereitungs-Vorrichtungen. Der Schlamm wird hierbei in der oder den Schlammaufbereitungs-Vorrichtung(en) zu Brennstoff umgesetzt, wobei die Schlammaufbereitungs-Vorrichtung(en) zumindest eine Schlamm-Trocknungseinheit und einen thermischen Schlamm-Aufbereiter umfassen. Der produzierte Brennstoff kann in einer elektrischen Energie-Herstellungseinheit zur Gewinnung elektrischer Energie verbrannt werden.

Aus WO 2016/066626 A2 ist ein Verfahren zur Hygienisierung von Bioabfällen bekannt. Die Bioabfälle werden in eine oder mehrere Hygienisierungskammer(n) eingebracht und die Hygienisierungskammer(n) durch Einkoppeln von Abwärme einer Holzverbrennungseinrichtung über einen Flüssigkeitskreislauf und Durchströmen der Kammer(n) durch heißes Abgas aus der Holzverbrennungseinrichtung beheizt.

US 2011/127470 A1 offenbart ein Verfahren zur Umwandlung von niederkalorischen, kohlenstoffhaltigem Abfallmaterial in Brenngas unter anoxischen Bedingungen. Das Abfallmaterial wird unter Beimengung von Wasser, Wasserdampf oder Kohlendioxid auf über 100 °C erhitzt. Zum Erhitzen kann Abwärme eines Abgases aus einem Klinkerkühler mittels eines Wärmetauschers genützt werden.

Aus WO 90/00700 A1 ist ein Verfahren zum Entsorgen eines kontaminierten Gerätes bekannt. Hierbei werden umweltschädliche Kontaminationen des Gerätes in einer thermischen Behandlungskammer pyrolysiert, und das entstehende Pyrolysegas wird in einer Hochtemperatur-Brennkammer einer Müllverbrennungsanlage entsorgt. Der Behandlungskammer wird Inertgas und/oder komprimierte Luft zugeführt, wobei eine Beheizung der Behandlungskammer mittels Heizkörper vorgesehen ist.

Der Artikel "Optimierung der thermischen Prozessführung beim Recycling von Aluminiumschrott unter Berücksichtigung des Einflusses organischer Anhaftungen auf den Aluminiumbrand" in der Zeitschrift "GASWÄRME International", (56), Nr. 8/2007, Seiten 559-562, beschreibt Versuche zur Beurteilung des Einflusses einer Vorbehandlung mittels Pyrolyse von mit geringen Mengen an organischen Verunreinigungen verunreinigtem Aluminiumschrott auf die Qualität der Aluminiumschmelze. Im Besonderen wird hierbei der Einfluss der Pyrolyseatmosphäre untersucht. Als Pyrolyseatmosphäre wird einerseits gezielt eine inerte Stickstoffatmosphäre hergestellt, wobei zur Bereitstellung Stickstoffgas mittels eines Gasbrenners vorgeheizt wird. Andererseits wird eine Rauchgasatmosphäre beschrieben, welche wiederum mittels eines Gasbrenners aus Erdgas erzeugt wird. Zur Beheizung des Pyrolyseofens sind außerdem durch einen Pyrolyse-Ofenraum geführte Heizstrahlrohre vorgesehen.

In EP 0 780 481 A1 wird ein Verfahren zur Rückgewinnung von Aluminium aus mit organischen Verbindungen behafteten Materialien mittels Pyrolyse in einer als Decoatinganlage bezeichneten Vorrichtung beschrieben. Vor einem Blankglühen wird ein Abtrennen des Pyrolysekoks gelehrt. Das entstehende Pyrolysegas kann in einer Brennkammer nachverbrannt und hiernach wieder als Heizgas eingesetzt werden. Im An- und Abfahrbetrieb wird die Brennkammer mit Erdgas betrieben.

Ähnlich offenbart auch der Artikel "Backofen für Aluminium" in der Zeitschrift "punkt", Das Magazin, 02/2016, Seiten 10ff, eine Pyrolyse von organischen Stoffen, welche mit Aluminiummaterial vermengt ist. Auch in diesem Artikel wird eine Verwendung des durch die Pyrolyse entstehenden Pyrolyse- bzw. Rauchgases beschrieben, wobei auch eine Verwendung des Rauchgases zum Beispiel zur Stromerzeugung erwähnt wird.

Aufgabe der vorliegenden Erfindung war es, die noch bestehenden Nachteile des Standes der Technik zu überwinden und ein verbessertes, Verfahren zur Rückgewinnung von Wertsoffen zur Verfügung zu stellen, mittels derer eine kosten- und energieeffiziente Aufbereitung von Abfallprodukten möglich ist.

Diese Aufgabe wird durch ein Verfahren gemäß den Ansprüchen gelöst.

Es wird ein Verfahren zur Rückgewinnung von Wertstoffen aus Abfallprodukten, bereitgestellt, welche Abfallprodukte organischen Verunreinigungen aufweisen.

Die Abfallprodukte werden einer thermischen Aufbereitung in einer thermischen Aufbereitungsvorrichtung unterzogen, während welcher thermischen Aufbereitung die organischen Verunreinigungen zumindest größtenteils pyrolisiert und/oder verbrannt werden.

Der thermischen Aufbereitungsvorrichtung wird zur thermischen Aufbereitung der Abfallprodukte ein heißes Abgas aus mindestens einem thermischen Produktionsprozess oder Stoffverarbeitungsprozess einer nebengeordneten Prozessanlage zugeführt.

Durch die angegebenen Maßnahmen kann eine kosten- und energieeffiziente Rückgewinnung von Wertstoffen mit hohem Reinheitsgrad bereitgestellt werden. Durch die Zuführung des heißen Abgases der nebengeordneten Prozessanlage kann eine ohnehin vorhandene Ressource zum Beheizen der thermischen Aufbereitungsvorrichtung genutzt werden. Von Vorteil ist hierbei zusätzlich, dass eine Entsorgung eines solchen, heißen Abgases zumindest teilweise vermieden werden kann, und das Abgas stattdessen zur Bereitstellung von erforderlicher Wärmeenergie für die thermische Aufbereitung der Abfallprodukte verwendet werden kann. Die organischen Verunreinigungen können hierbei durch Erhitzen mit dem heißen Abgas in sauerstofffreier oder sauerstoffarmer Atmosphäre vorwiegend pyrolisiert oder in sauerstoffreicher Atmosphäre vorwiegend verbrannt werden. In Abhängigkeit von dem Sauerstoffgehalt, beispielsweise bei einem Sauerstoffgehalt zwischen 3 Gew. % und 10 Gew. % in der thermischen Aufbereitungsvorrichtung, können sich grundsätzlich sowohl Pyrolyse als auch Verbrennungsprodukte bilden. In solchen Fällen werden die organischen Verunreinigungen also jeweils teilweise pyrolysiert und verbrannt, und können durch die thermische Aufbereitung Pyrolyseabgas und Verbrennungsabgas entstehen.

Grundsätzlich kann vorgesehen sein, dass eine Temperatur des heißen Abgases aus dem thermischen Produktionsprozess oder Stoffverarbeitungsprozess der nebengeordneten Prozessanlage mindestens 200 °C, vorzugweise mindestens 500 °C, insbesondere mindestens 900 °C beträgt. Hierdurch kann eine Bandbreite an Abfallprodukten gesteigert werden, welche mittels des Verfahrens aufbereitet werden können, da ein heißes Abgas mit ausreichend hoher Temperatur zur Pyrolyse und/oder Verbrennung bereitgestellt werden kann. Zur Rückgewinnung von temperaturempfindlichen Wertstoffen kann eine Temperatur des heißen Abgases vor dem Zuführen in die thermische Aufbereitungsvorrichtung abgesenkt werden. Das heiße Abgas kann grundsätzlich Sauerstoff umfassen, oder kann im Wesentlichen sauerstofffrei sein. Je nach Art des thermischen Produktionsprozesses oder Stoffverarbeitungsprozesses der nebengeordneten Prozessanlage kann ein Sauerstoffgehalt des heißen Abgases zum Beispiel durch die Entnahmestelle des heißen Abgases aus dem thermischen Produktionsprozess oder Stoffverarbeitungsprozess beeinflusst werden.

Als Abfallprodukte können im Prinzip jedwede Objekte bzw. Abfallprodukte bereitgestellt werden, welche einen rückzugewinnenden Wertstoff und organische, pyrolisierbare und/oder verbrennbare Verunreinigungen aufweisen. Die Abfallprodukte können hierbei vor der thermischen Aufbereitung in der thermischen Aufbereitungsvorrichtung grundsätzlich beliebige Vorbehandlungsschritte, wie etwa Zerkleinerung oder Grob-Abtrennung der Wertstoffe von Verunreinigungen bzw. nicht materiell rezyklierbaren Bestandteilen, durchlaufen haben. Rein beispielhaft sei hierfür eine Zerkleinerung von Altreifen, und die grobe Entfernung des Reifengummis von rückzugewinnenden Festigkeitsträgern, wie etwa Metall- oder Stahldrähten oder, Kunststofffasern bzw. Fasergeweben genannt. Auch andere Abfallprodukte, wie etwa Abwrackteile von Autos oder anderer, verunreinigter Schrott, beklebte Metallprodukte, oder auch beispielsweise ummantelte Kabel etc., können auf ähnliche Weise vor der thermischen Aufbereitung zur Bereitstellung entsprechender Abfallprodukte vorbehandelt werden. Andererseits ist es auch möglich, dass Abfallprodukte im Wesentlichen ohne mechanische Vorbehandlungsschritte in der thermischen Aufbereitungsvorrichtung aufbereitet werden. Hierfür sei rein beispielhaft eine Aufbereitung von getrockneten Klärschlammpartikeln als Abfallprodukte zwecks Rückgewinnung des Wertstoffes Phosphor genannt. Bei der Aufbereitung von Klärschlamm können zum Beispiel die organischen Trockenbestandteile der Klärschlammpartikel in der Aufbereitungsvorrichtung durch Pyrolyse bzw. Abschwelen, und/oder Verbrennung zumindest weitestgehend entfernt, und anschließend Phosphate und allenfalls weitere Wertstoffe rückgewonnen werden. Die Abfallprodukte können ganz grundsätzlich auch Flüssigkeiten bzw. Restflüssigkeiten umfassen, oder durchaus auch durch Flüssigkeiten gebildet sein.

Ganz grundsätzlich kann zwischen vorwiegender pyrolytischer Zersetzung, oder vorwiegender Zersetzung der organischen Verunreinigungen durch Verbrennung gewählt werden. Dies vor allem in Abhängigkeit von den rückzugewinnenden Wertstoffen, wobei eine vorwiegende Verbrennung der organischen Verunreinigungen im Falle nicht brennbarer Wertstoffe, wie etwa Kohlenstofffasern, Edelmetallen oder Salz-Verbindungen, zum Beispiel Phosphaten, von Vorteil sein kann. Wenn die Abfallprodukte Wertstoffe aufweisen, welche brennbar oder allgemein sauerstoffempfindlich sind, wie beispielsweise im Falle unedlerer Metalle, kann eine Zersetzung der organischen Verunreinigungen unter Ausschluss von Sauerstoff, also zumindest vorwiegend durch Pyrolyse, zweckmäßig sein. In diesem Zusammenhang kann es weiters zweckmäßig sein, wenn das heiße Abgas aus dem thermischen Produktionsprozess oder Stoffverarbeitungsprozess der nebengeordneten Prozessanlage, einen nur geringen Sauerstoffanteil, oder kaum Sauerstoff aufweist.

Der thermische Produktionsprozess oder Stoffverarbeitungsprozess kann im Prinzip jedweder thermische Produktionsprozess oder Stoffverarbeitungsprozess einer nebengeordneten Prozessanlage sein, bei welchem ein heißes Abgas anfällt. Zum Beispiel kann der thermischen Aufbereitungsvorrichtung ein heißes Abgas aus einem Müllverbrennungsprozess einer nebengeordneten Müllverbrennungsanlage zugeführt werden. Grundsätzlich kann der thermischen Aufbereitungsvorrichtung aber auch ein heißes Abgas aus einem thermischen Produktionsprozess einer nebengeordneten Prozessanlage, wie etwa einer chemischen Prozessanlage oder einer Anlage zur Metallverarbeitung und so weiter, zugeführt werden. Falls vorrangig eine Pyrolyse der organischen Verunreinigungen durchgeführt werden soll, kann das heiße Abgas aus dem thermischen Produktionsprozess oder Stoffverarbeitungsprozess der nebengeordneten Prozessanlage vorzugsweise einen nur geringen Sauerstoffanteil aufweisen.

Als thermische Aufbereitungsvorrichtung kann prinzipiell jedwede Vorrichtung eingesetzt werden, welche zur Pyrolyse und/oder Verbrennung der organischen Verunreinigungen geeignet ist. Zum Beispiel kann als thermische Aufbereitungsvorrichtung ein Kammerofen oder ein anderer geeigneter Ofen, welcher mit dem heißen Abgas wahlweise direkt oder indirekt beheizbar ist, eingesetzt werden. Grundsätzlich kann eine thermische Aufbereitungsvorrichtung eingesetzt werden, bei welcher eine Beförderung der Abfallprodukte von einem Beschickungsbereich zu einem Austragsbereich vorgesehen ist. Hierzu können im Prinzip geeignete Fördermittel, wie etwa angetriebene Förderbänder vorgesehen sein. Vorzugsweise kann für die thermische Aufbereitung der Abfallprodukte ein Drehrohrofen eingesetzt werden, da hierbei eine fortwährende Förderung der Abfallprodukte bzw. Wertstoffe durch den Drehrohrofen auch bei sehr hohen Temperaturen, beispielsweise bis 1000 °C oder darüber ermöglicht ist. Eine Beschickung in und Austragung aus dem Drehrohrofen kann hierbei jeweils über Schleusen erfolgen, wie dies an sich bekannt ist. Geeignete Drehrohröfen können grundsätzlich direkt oder indirekt beheizbar sein. Bevorzugt werden direkt beheizbare, thermische Aufbereitungsvorrichtungen eingesetzt, bei welchen eine Zufuhr des heißen Abgases aus dem thermischen Produktionsprozess oder Stoffverarbeitungsprozess der nebengeordneten Prozessanlage direkt in einen Reaktionsraum, welchem auch die Abfallprodukte zur thermischen Aufbereitung zugeführt werden, erfolgen kann.

Letztlich können durch die angegebenen Maßnahmen Wertstoffe mit hohem Reinheitsgrad aus den Abfallprodukten gewonnen werden. Dies ohne dass erheblicher Energieaufwand oder der Einsatz von zusätzlichen Brennstoffen hierzu erforderlich ist. Nach der thermischen Aufbereitung allenfalls anfallende Verbrennungsasche und/oder Pyrolyserückstände können einfach entfernt werden, bzw. liegen nach der thermischen Aufbereitung bereits von den Wertstoffen getrennt vor, Die organischen Verunreinigungen können durch die thermische Behandlung bzw. Pyrolyse und/oder Verbrennung zumindest größtenteils zersetzt, und die Zersetzungsprodukte in die Gasphase überführt, und aus der thermischen Aufbereitungsvorrichtung abgeführt werden.

Bei einer Weiterbildung des Verfahrens kann vorgesehen sein, dass das heiße Abgas während der thermischen Aufbereitung der Abfallprodukte im Gegenstrom bezüglich einer Hindurchführungsrichtung für die Abfallprodukte einem Reaktionsraum der thermischen Aufbereitungsvorrichtung oder einem Beheizungsraum für den Reaktionsraum zugeführt wird.

Hierbei kann eine thermische Aufbereitungsvorrichtung eingesetzt werden, bei welcher eine Hindurchführung der Abfallprodukte durch die thermische Aufbereitungsvorrichtung von einem Beschickungsbereich zu einem Austragsbereich vorgesehen ist. So kann etwa ein Drehrohrofen als thermische Aufbereitungsvorrichtung eingesetzt werden. Im Besonderen bei einer überwiegenden Pyrolyse der organischen Verunreinigungen kann eine Zuführung des heißen Abgases im Gegenstrom zu der Hindurchführungsrichtung der Abfallprodukte in die thermische Aufbereitungsvorrichtung bzw. einen Reaktionsraum oder Beheizungsraum der thermischen Aufbereitungsvorrichtung zweckmäßig sein. Vorteilhaft kann hierbei im Speziellen sein, dass die höchste Temperatur in der thermischen Aufbereitungsvorrichtung im Bereich einer Austragstelle für die Wertstoffe vorliegen kann.

Es kann aber auch sinnvoll sein, wenn das heiße Abgas während der thermischen Aufbereitung der Abfallprodukte im Gleichstrom bezüglich einer Hindurchführungsrichtung für die Abfallprodukte einem Reaktionsraum der thermischen Aufbereitungsvorrichtung oder einem Beheizungsraum für den Reaktionsraum zugeführt wird.

Diese Vorgehensweise kann im Speziellen im Falle einer vorwiegenden Verbrennung der organischen Verunreinigungen in sauerstoffreicher Atmosphäre zweckmäßig sein. Dies, da durch Verbrennung der organischen Verunreinigungen eine Temperatur des heißen Abgases weiter erhöht werden kann, sodass bei Gleichstromführung wiederum eine höchste Temperatur im Bereich einer Austragsstelle für die Wertstoffe erzielbar ist.

Des Weiteren kann vorgesehen sein, dass zur thermischen Aufbereitung der Abfallprodukte einem Reaktionsraum der thermischen Aufbereitungsvorrichtung während der thermischen Aufbereitung der Abfallprodukte Frischluft zugeführt wird.

Dies ermöglicht im Speziellen eine vorwiegende Verbrennung der organischen Verunreinigungen unter kontrollierter Sauerstoffatmosphäre in der thermischen Aufbereitungsvorrichtung bzw. in dem Reaktionsraum der thermischen Aufbereitungsvorrichtung. Unabhängig hiervon kann auch das heiße Abgas dem Reaktionsraum zugeführt werden, oder kann das heiße Abgas einem Beheizungsraum für den Reaktionsraum, beispielsweise einem Heizmantel zugeführt werden. Die der Aufbereitungsvorrichtung pro Zeiteinheit zugeführte Menge an Frischluft kann zum Beispiel durch Stellklappen oder andere Luftstromregelvorrichtungen in an sich bekannter Weise beeinflusst werden.

Zum Beispiel kann es zweckmäßig sein, wenn zur thermischen Aufbereitung der Abfallprodukte dem heißen Abgas vor der Zuführung in einen Reaktionsraum der thermischen Aufbereitungsvorrichtung Frischluft beigemengt wird.

Hierdurch kann der thermischen Aufbereitungsvorrichtung bzw. einem Reaktionsraum der thermischen Aufbereitungsvorrichtung das heiße Abgas und die Frischluft gemeinsam zugeführt werden. Eine getrennte Zuführung kann dadurch erübrigt werden, bzw. kann die Frischluft dem heißen Abgasstrom beigemengt werden.

Vorzugsweise kann hierbei vorgesehen sein, dass das heiße Abgas und die Frischluft vor der Zuführung in den Reaktionsraum in einer Gasmischvorrichtung gemischt werden.

Auf diese Weise kann vor der Zuführung in die thermische Aufbereitungsvorrichtung eine möglichst vollständige Durchmischung des heißen Abgases und der Frischluft erzielt werden. Als Gasmischvorrichtung können an sich bekannte Gas-Mischkammern eingesetzt werden, welche zum Beispiel auch Elemente zur gezielten Erzeugung von Turbulenzen aufweisen können.

Im Speziellen kann vorgesehen sein, dass eine dem Reaktionsraum pro Zeiteinheit zugeführte Sauerstoffmenge und/oder eine Temperatur in dem Reaktionsraum während der thermischen Aufbereitung der Abfallprodukte, durch die pro Zeiteinheit zugeführte Menge an Frischluft beeinflusst wird.

Durch diese Vorgehensweise können die Abfallprodukte unter gezielt kontrollierten, atmosphärischen Bedingungen in dem Reaktionsraum aufbereitet werden.

Bei einer Weiterbildung kann aber auch vorgesehen sein, dass eine Temperatur des heißen Abgases vor dessen Zuführung in die thermische Aufbereitungsvorrichtung, insbesondere mittels eines Wärmetauschers oder durch Zuführung von Frischluft, bedarfsabhängig hinsichtlich der aufzubereitenden Abfallprodukte, bzw. hinsichtlich der Bestandteile, insbesondere hinsichtlich der Wertstoffe und organischen Verunreinigungen der Abfallprodukte, eingestellt wird.

Hierdurch ist es einerseits möglich, auch temperaturempfindliche Wertstoffe aus Abfallprodukten rückzugewinnen. Eine Temperaturerniedrigung des heißen Abgases kann zum Beispiel durchgeführt werden, um ein Schmelzen oder Verdampfen eines Wertstoffes, oder eine chemische Reaktion eines Wertstoffes hintanzuhalten bzw. zu verhindern. Beispielsweise ist es möglich, dass eine Temperatur des heißen Abgases vor Zuführung in die thermische Aufbereitungsvorrichtung, entweder direkt in den Reaktionsraum oder in einen Beheizungsraum für den Reaktionsraum, auf bis zu 200 °C oder sogar 100 °C abgesenkt wird. Durch diese Vorgehensweise können auch temperaturempfindliche Wertstoffe, etwa der Wertstoff Aluminium problemlos aus verunreinigten Abfallprodukten rückgewonnen werden. Im Speziellen kann vorgesehen sein, dass die Temperatur des heißen Abgases mittels eines ein Wärmetauscher oder durch Zuführung von Frischluft beeinflusst wird. Durch beide angegebenen Methoden kann eine Temperatur des heißen Abgases vor der Zuführung in die thermische Aufbereitungsvorrichtung gezielt beeinflusst bzw. eingestellt werden, wobei im Speziellen eine Absenkung der Temperatur des heißen Abgases bewerkstelligt werden kann.

Ein Wärmetauscher kann zum Beispiel mit Luft oder einer Flüssigkeit, insbesondere einer Kühlflüssigkeit, wie etwa Wasser, beschickt werden. Eine Beeinflussung der Temperatur des heißen Abgases mittels eines Wärmetauschers ist insbesondere zweckmäßig, wenn die organischen Verunreinigungen in der thermischen Aufbereitungsvorrichtung vorrangig mittels Pyrolyse, also in sauerstoffarmer oder - freier Atmosphäre von den Wertstoffen entfernt bzw. abgeschwelt werden sollen. Durch die angegebenen Maßnahmen zur Temperaturbeeinflussung kann die Verfahrensflexibilität weiter verbessert werden, und kann so eine größere Vielfalt an Abfallprodukten mittels des Verfahrens aufbereitet werden.

Ganz grundsätzlich kann vorgesehen sein, dass eine der thermischen Aufbereitungsvorrichtung pro Zeiteinheit zugeführte Wärmeenergiemenge durch die der thermischen Aufbereitungsvorrichtung zugeführte Menge an heißem Abgas beeinflusst wird.

Auf diese Weise kann die jeweils zur Pyrolyse und/oder Verbrennung der organischen Verunreinigungen benötigte Wärmeenergie für die thermische Aufbereitung der Abfallprodukte bereitgestellt werden. Die der Aufbereitungsvorrichtung pro Zeiteinheit zugeführte Menge an heißem Abgas kann zum Beispiel durch Stellklappen oder andere Luftstromregelvorrichtungen in an sich bekannter Weise bewerkstelligt werden.

Es kann aber auch sinnvoll sein, wenn der thermischen Aufbereitungsvorrichtung zur thermischen Aufbereitung der Abfallprodukte ein heißes Abgas aus einem weiteren thermischen Produktionsprozess oder Stoffverarbeitungsprozess der nebengeordneten Prozessanlage zugeführt wird.

Durch diese Vorgehensweise sind mehrere, heiße Abgase zur Erhitzung der Abfallprodukte, bzw. zur Pyrolyse und/oder Verbrennung der organischen Verunreinigungen nutzbar. Ganz grundsätzlich kann jeweils ein heißes Abgas separat, oder können beide heißen Abgase gemeinsam der thermischen Aufbereitungsvorrichtung zugeführt werden. Auf diese Weise kann auch ein weiteres Mittel zur Beeinflussung einer Temperatur in dem Reaktionsraum der thermischen Aufbereitungsvorrichtung bereitgestellt werden, da heiße Abgase mit unterschiedlichen Temperaturniveaus der thermischen Aufbereitungsvorrichtung zugeführt werden können. Ganz generell kann so auch eine verbesserte Verfahrensflexibilität bereitgestellt werden.

In diesem Zusammenhang kann auch vorgesehen sein, dass das heiße Abgas aus dem thermischen Produktionsprozess oder Stoffverarbeitungsprozess und/oder das heiße Abgas aus dem weiteren thermischen Produktionsprozess oder Stoffverarbeitungsprozess vor der Zuführung in die thermische Aufbereitungsvorrichtung über eine Gasmischvorrichtung geführt werden.

Von Vorteil ist hierbei unter Anderem, dass für eine Zuführung des oder der heißen Abgase(s), ab der Gasmischvorrichtung nur eine Gasleitung vorgesehen werden muss. Dies unabhängig davon, ob der thermischen Aufbereitungsvorrichtung nur heißes Abgas aus dem thermischen Produktionsprozess oder Stoffverarbeitungsprozess, oder nur heißes Abgas aus dem weiteren, thermischen Produktionsprozess oder Stoffverarbeitungsprozess, oder sowohl heißes Abgas aus dem thermischen Produktionsprozess oder Stoffverarbeitungsprozess als auch heißes Abgas aus dem weiteren, thermischen Produktionsprozess oder Stoffverarbeitungsprozess zugeführt wird.

Außerdem kann vorgesehen sein, dass der thermischen Aufbereitungsvorrichtung zur thermischen Aufbereitung der Abfallprodukte bedarfsabhängig, insbesondere zum Starten der thermischen Aufbereitung, ein Heizgas aus einer separaten Brennervorrichtung zugeführt wird.

Hierdurch kann ein weiteres Hilfsmittel zur gezielten Beeinflussung des Verfahrens zur Aufbereitung der Abfallprodukte, insbesondere zur Beeinflussung einer Temperatur in dem Reaktionsraum der thermischen Aufbereitungsvorrichtung bereitgestellt werden. Im Speziellen kann das Heizgas zum Starten der thermischen Aufbereitung bzw. zum Hochfahren der thermischen Aufbereitungsvorrichtung herangezogen werden, oder kann das Heizgas zum Beispiel bei Bedarf einer sehr hohen Pyrolyse- bzw. Verbrennungstemperatur in dem Reaktionsraum während der thermischen Aufbereitung, zusätzlich der thermischen Aufbereitungsvorrichtung zugeführt werden.

Bei einer Verfahrensvariante kann vorgesehen sein, dass eine Temperatur eines durch vorwiegende Verbrennung der organischen Verunreinigungen entstehenden Verbrennungsabgases gegenüber einer Temperatur des zugeführten, heißen Abgases durch die Verbrennung der organischen Verunreinigungen in der thermischen Aufbereitungsvorrichtung erhöht wird.

Vorteilhaft ist hierbei vor allem, dass ein derartiges, im Vergleich zum Ausgangszustand weiter erhitztes Verbrennungsabgas wiederum für andere thermische Prozesse, im Besonderen für thermische Prozesse, welche ein besonders hohes Temperaturniveau erfordern, genutzt werden kann.

Des Weiteren kann vorgesehen sein, dass ein durch die thermische Aufbereitung der Abfallprodukte entstehendes Aufbereitungsabgas wenigstens teilweise dem thermischen Produktionsprozess oder Stoffverarbeitungsprozess der nebengeordneten Prozessanlage, und/oder einem weiteren, thermischen Prozess der nebengeordneten Prozessanlage, und/oder einem thermischen Prozess einer weiteren nebengeordneten Prozessanlage zugeführt wird.

Auf diese Weise können auch das Aufbereitungsabgas, bzw. Pyrolyseabgase und/oder Verbrennungsabgase aus der thermischen Aufbereitung der Abfallprodukte auf möglichst vorteilhafte Weise genutzt werden, und kann eine betriebsaufwendige Entsorgung des Aufbereitungsabgases wenigstens zum Teil erübrigt werden. Eine Zuführung zu einem thermischen Prozess der nebengeordneten Prozessanlage und/oder zu einem thermischen Prozess einer weiteren, nebengeordneten Prozessanlage kann hierbei in erster Linie in Abhängigkeit von der Zusammensetzung und der Temperatur des Aufbereitungsgases gewählt werden. Zum Beispiel kann vorgesehen sein, dass ein durch vorwiegende Pyrolyse in der thermischen Aufbereitungsvorrichtung entstandenes Aufbereitungsabgas bzw. Pyrolyseabgas, welches in der Regel brennbare, gasförmige Bestandteile wie etwa Kohlenwasserstoffe aufweist, einem Verbrennungsprozess einer nebengeordneten Prozessanlage zugeführt wird. Auf diese Weise kann ein Heizwert eines solchen Pyrolyseabgases bzw. Aufbereitungsabgases aus der thermischen Aufbereitung für thermische Verbrennungsprozesse vorteilhaft genutzt werden. Ein durch vorwiegende Verbrennung von organischen Verunreinigungen während der thermischen Aufbereitung der Abfallprodukte, gegebenenfalls weiter erhitzte Aufbereitungsabgas bzw. Verbrennungsabgas, kann zum Beispiel einem thermischen Prozess zur Erzeugung von Wasserdampf für die Stromerzeugung, oder auch wiederum dem thermischen Produktionsprozess oder Stoffverarbeitungsprozess der nebengeordneten Prozessanlage zugeführt werden. Besonders vorteilhafterweise können das heiße Abgas und das während der thermischen Aufbereitung der Abfallprodukte anfallende Aufbereitungsabgas, in Kreisläufen jeweils wiederverwendet bzw. jeweils anderen, thermischen Prozesse wieder zugeführt werden, sodass eine unvorteilhafte Entsorgung von heißem Abgas bzw. Aufbereitungsabgas möglichst minimiert werden kann. Dies ermöglicht eine besonders energieeffiziente und ressourcenschonende Verfahrensführung.

In diesem Zusammenhang kann es auch zweckmäßig sein, wenn das durch die thermische Aufbereitung der Abfallprodukte entstehende Aufbereitungsabgas vor Zuführung in den thermischen Produktionsprozess oder Stoffverarbeitungsprozess der nebengeordneten Prozessanlage, oder in den weiteren, thermischen Prozess der nebengeordneten Prozessanlage, oder in den thermischen Prozess einer weiteren nebengeordneten Prozessanlage, über eine Filtervorrichtung geführt wird.

Auf diese Weise können etwa mit dem Aufbereitungsabgas mitgeschleppte, flüssige oder feste Pyrolyserückstände und/oder Ascherückstände entfernt werden. Auf diese Weise kann eine potentielle, ungewünschte Beeinflussung solcher Bestandteile auf den thermischen Produktionsprozess oder Stoffverarbeitungsprozess der nebengeordneten Prozessanlage, oder einem anderen, thermischen Prozess, welchem das Aufbereitungsabgas zugeführt wird, hintangehalten werden.

Ganz grundsätzlich kann vorgesehen sein, dass der thermischen Aufbereitungsvorrichtung ein heißes Abgas aus einem thermischen Prozess einer nebengeordneten Prozessanlage, in welchem thermischen Prozess Materialien verbrannt werden, zugeführt wird.

Ein solcher thermischer Produktions- oder Stoffumwandlungsprozess eignet sich in besonderem Ausmaß für die thermische Aufbereitung der Abfallprodukte, da der thermischen Aufbereitungsvorrichtung ein heißes Abgas mit sehr hoher Temperatur zugeführt werden kann.

Bei einer bevorzugten Ausführung des Verfahrens kann vorgesehen sein, dass der thermischen Aufbereitungsvorrichtung ein heißes Abgas aus einem thermischen Drehrohrofenprozess bzw. Zementklinkerproduktionsprozess einer nebengeordneten Zementklinkerproduktionsanlage, und/oder ein heißes Abgas aus einem, dem Drehrohrofenprozess vorgelagerten, thermischen Kalzinationsprozess der nebengeordneten Zementklinkerproduktionsanlage zugeführt wird.

Diese thermischen Prozesse eignen sich besonders für die thermische Aufbereitung von Abfallprodukten, da heiße Abgase mit hohem Temperaturniveau, zum Beispiel ca. 900 °C bis 1200 °C für die Zuführung in die thermische Aufbereitungsvorrichtung bereitgestellt werden können. Des Weiteren kann in diesem Falle heißes Abgas fortwährend bzw. ununterbrochen für lange Zeiträume für die thermische Aufbereitung bereitgestellt werden, da Zementklinkerproduktionen typischerweise kontinuierlich und ohne Unterbrechungen über lange Zeiträume durchgeführt werden. Auf diese Weise können Abfallprodukte auch mit hohen Durchsatzraten thermisch aufbereitet werden.

Hierbei kann auch vorgesehen sein, dass ein durch die thermische Aufbereitung der Abfallprodukte entstehendes Aufbereitungsabgas dem thermischen Drehrohrofenprozess, und/oder dem, dem Drehrohrofenprozess vorgelagerten, thermischen Kalzinationsprozess zugeführt wird.

Auch zur Zuführung bzw. Aufnahme des Aufbereitungsabgases aus der thermischen Aufbereitung sind thermische Prozesse aus der Zementklinkerproduktion in besonderem Ausmaß geeignet. Dies, da das Aufbereitungsabgas entweder aufgrund des Gehalts verbrennbarer Gasbestandteile, und/oder aufgrund hoher Temperatur für die Zementklinkerproduktion und/oder für eine vorgeordnete Kalzination sehr gut nutzbar ist. Im Idealfall können auf diese Weise im Betrieb der Zementklinkerproduktion und im Betrieb der thermischen Aufbereitung der Abfallprodukte, zumindest überwiegend geschlossene Kreisläufe geschaffen werden, in welchem heißes Abgas aus thermischen Prozessen der nebengeordneten Zementklinkerproduktionsanlage wieder der thermischen Aufbereitungsvorrichtung, und Aufbereitungsabgas aus der thermischen Aufbereitung der Abfallprodukte wieder der nebengeordneten Zementklinkerproduktionsanlage zugeführt werden. Hierdurch kann eine höchst energieeffiziente Verfahrensführung bereitgestellt werden.

Es kann aber auch vorgesehen sein, dass ein durch die thermische Aufbereitung der Abfallprodukte entstehendes Aufbereitungsabgas zumindest teilweise über eine bestehende Abgasabführungsvorrichtung der nebengeordneten Prozessanlage abgeführt wird.

Hierdurch kann eine ohnehin bestehende Abgasabführungsvorrichtung der nebengeordneten Prozessanlage zur Entsorgung des Aufbereitungsabgases aus der thermischen Aufbereitung der Abfallprodukte genutzt werden. Eine solche Abgasabführungsvorrichtung kann typischerweise eine Kühlvorrichtung zur Kühlung, sowie allenfalls eine oder mehrere Filtervorrichtung(en) bzw. Abgasreinigungsvorrichtung(en) zur Reinigung des Abgases aufweisen. Eine Bereitstellung einer separaten Abgasabführungsvorrichtung für das Aufbereitungsabgas aus der thermischen Aufbereitung kann so erübrigt werden. Andererseits kann auch vorgesehen sein, dass das Aufbereitungsabgas aus dem thermischen Aufbereitung der Abfallprodukte einem thermischen Prozess der nebengeordneten Prozessanlage zugeführt wird, und Abgas aus der nebengeordneten Prozessanlage entsorgt wird.

Bei dem Verfahren ist vorgesehen, dass eine maximale Temperatur in einem Rektionsraum der thermischen Aufbereitungsvorrichtung während der thermischen Aufbereitung derart gewählt wird, dass die rückzugewinnenden Wertstoffe während der thermischen Aufbereitung im festen Aggregatszustand vorliegen.

Durch eine solche Verfahrensführung kann insbesondere die Rückgewinnung der Wertstoffe in einfacher und effizienter Art und Weise erfolgen, wobei nach der thermischen Aufbereitung durch Pyrolyse bzw. Abschwelen, und/oder Verbrennung der organischen Verunreinigungen, außer einer allfälligen Abtrennung von Verbrennungsasche und/oder Pyrolyserückständen, keine weiteren, aufwendigen Maßnahmen zur Rückgewinnung der Wertstoffe erforderlich sind.

Schließlich kann auch vorgesehen sein, dass eine Temperatur und ein Sauerstoffgehalt in der thermischen Aufbereitungsvorrichtung während der thermischen Aufbereitung derart gewählt werden, dass zumindest 90 Gew. % der rückzugewinnenden Wertstoffe während der thermischen Aufbereitung chemisch unbeeinflusst bleiben.

Durch diese Vorgehensweise kann eine gute Qualität der rückzugewinnenden Wertstoffe in zumindest weitestgehend, chemisch unveränderter Form bereitgestellt werden, womit auch eine Wertsteigerung erzielbar ist. In manchen Fällen kann aber auch eine gezielte chemische Umwandlung der Wertstoffe während der thermischen Aufbereitung der Abfallprodukte sinnvoll sein, insbesondere wenn eine solche chemische Umwandlung für die Verfahrensführung zweckdienlich ist, oder wenn hierdurch ein Wert der Wertstoffe gesteigert werden kann.

Zum besseren Verständnis der Erfindung wird diese anhand der nachfolgenden Figuren näher erläutert.

Es zeigen jeweils in stark vereinfachter, schematischer Darstellung:
- Fig. 1: ein Ausführungsbeispiel einer thermischen Aufbereitungsvorrichtung und eine ausschnittsweise dargestellte, nebengeordnete Prozessanlage, mit Darstellung des Verfahrens;
- Fig. 2: ein weiteres Ausführungsbeispiel einer thermischen Aufbereitungsvorrichtung und eine ausschnittsweise dargestellte, nebengeordnete Prozessanlage, mit Darstellung des Verfahrens

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

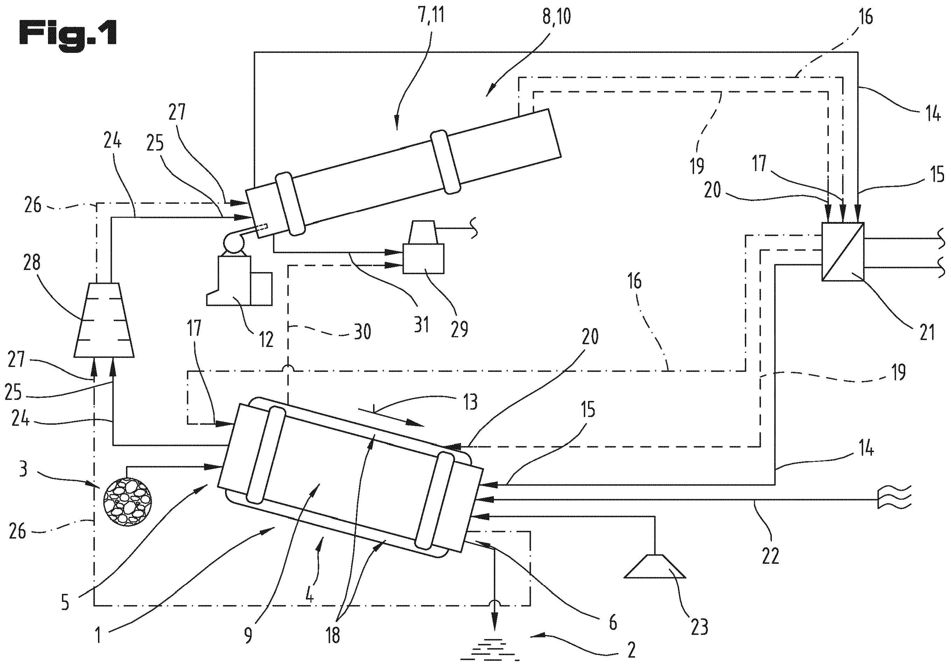

In der Fig. 1 ist zur Darstellung des Verfahrens eine thermische Aufbereitungsvorrichtung 1 dargestellt, mittels welcher Wertstoffe 2 aus Abfallprodukten 3 rückgewonnen werden können. Die Abfallprodukte 3 weisen hierbei organische Verunreinigungen auf. In der thermischen Aufbereitungsvorrichtung 1 können im Prinzip jedwede Abfallprodukte 3 zur Rückgewinnung der Wertstoffe 2 aufbereitet werden, wie beispielsweise, gegebenenfalls vorgetrockneter Klärschlamm, oder Bestandteile von Gegenständen, wie etwa Altreifen oder anderen Abfallprodukten. Ganz grundsätzlich können die Abfallprodukte 3 vor der Aufbereitung beliebige Vorbehandlungsschritte durchlaufen haben, wie etwa Schritte zur Zerkleinerung von Abfallprodukten oder Schritte zur Grobabtrennung der Wertstoffe 2 von Verunreinigungen.

Wie in der Fig. 1 schematisch veranschaulicht ist, werden die Abfallprodukte 3 zur Rückgewinnung der Wertstoffe 2 in der thermischen Aufbereitungsvorrichtung 1 einer thermischen Aufbereitung unterzogen. Während dieser thermischen Aufbereitung werden die organischen Verunreinigungen zumindest größtenteils pyrolisiert und/oder verbrannt, also durch Einwirkung hoher Temperaturen und gegebenenfalls durch Sauerstoff chemisch in flüchtige Bestandteile und allenfalls flüssige oder feste Pyrolyse- und/oder Verbrennungsrückstände umgewandelt.

Als thermische Aufbereitungsvorrichtung 1 kann prinzipiell jedwede Vorrichtung eingesetzt werden, welche zur Pyrolyse und/oder Verbrennung der organischen Verunreinigungen geeignet ist, rein beispielhaft durch einen Kammerofen. Bei dem Ausführungsbeispiel gemäß der Fig. 1 ist die thermische Aufbereitungsvorrichtung 1 durch einen Drehrohrofen 4 gebildet. Von Vorteil ist hierbei, dass die Abfallprodukte 3 fortwährend von einem Beschickungsbereich 5 zu einem Austragsbereich 6 befördert werden können, und somit eine kontinuierliche, thermische Aufbereitung der Abfallprodukte 3 durchgeführt werden kann. Eine Beschickung der thermischen Aufbereitungsvorrichtung 1 mit den Abfallprodukten 3 bzw. ein Austragen der Wertstoffe 2 kann in diesem Fall zum Beispiel jeweils über Schleusen erfolgen.

Der thermischen Aufbereitungsvorrichtung 1 wird zur thermischen Aufbereitung der Abfallprodukte 3 ein heißes Abgas aus mindestens einem thermischen Produktionsprozess oder Stoffverarbeitungsprozess 7 einer nebengeordneten Prozessanlage 8 zugeführt wird, wie dies in der Fig. 1 veranschaulicht ist. Insbesondere wird der thermischen Aufbereitungsvorrichtung 1 das heiße Abgas zwecks Beheizung eines Reaktionsraumes 9 der thermischen Aufbereitungsvorrichtung 1, in welchem Reaktionsraum 9 die organischen Verunreinigungen pyrolysiert oder verbrannt werden, zugeführt. Hierbei können die organischen Verunreinigungen pyrolysiert werden, wenn das heiße Abgas keinen Sauerstoff, oder wenigstens nur einen sehr geringen Anteil an Sauerstoff aufweist.

Der thermische Produktionsprozess oder Stoffverarbeitungsprozess 7 kann im Prinzip jedweder, thermische Produktionsprozess oder Stoffverarbeitungsprozess 7 einer nebengeordneten Prozessanlage 8 sein, bei welchem ein heißes Abgas anfällt. Zum Beispiel kann der thermischen Aufbereitungsvorrichtung 1 ein heißes Abgas aus einem Müllverbrennungsprozess einer nebengeordneten Müllverbrennungsanlage, oder beispielsweise ein heißes Abgas aus einem thermischen Prozess einer chemischen Prozessanlage, zugeführt werden. Im Speziellen kann es vorteilhaft sein, wenn der thermischen Aufbereitungsvorrichtung 1 ein heißes Abgas aus einem thermischen Prozess einer nebengeordneten Prozessanlage 8, in welchem thermischen Prozess Materialien verbrannt werden, zugeführt wird. In solchen Fällen kann das heiße Abgas in Abhängigkeit von einer Entnahmestelle aus dem thermischen Verbrennungsprozess keinen Sauerstoff, oder einen nur sehr geringen Sauerstoffanteil aufweisen. Das der Aufbereitungsvorrichtung 1 zugeführte, heiße Abgas wurde also vor der Zuführung in einem thermischen Produktionsprozess oder Stoffverarbeitungsprozess 7, insbesondere Verbrennungsprozess der nebengeordneten Prozessanlage 8 vorerhitzt.

Im Besonderen kann es von Vorteil sein, dass der thermischen Aufbereitungsvorrichtung 1 ein heißes Abgas aus einer nebengeordneten Zementklinkerproduktionsanlage 10, insbesondere aus einem thermischen Zementklinkerproduktionsprozess bzw. Drehrohrofenprozess 11 einer nebengeordneten Zementklinkerproduktionsanlage 10 zugeführt wird. In der Fig.1 ist als Beispiel für eine nebengeordnete Prozessanlage 8 ausschnittsweise eine solche Zementklinkerproduktionsanlage 10 dargestellt, wobei im dargestellten Ausführungsbeispiel lediglich ein üblicherweise zur Herstellung des Zementklinkers eingesetzter Drehrohrofenprozess 11 schematisch veranschaulicht ist. Ein solcher Drehrohrofenprozess 11 kann zum Beispiel mit Brennstoffen aus Brennstoffsilos 12 befeuert werden, wie dies an sich bekannt ist. Zusätzlich kann zur Befeuerung auch brennbares Abfallmaterial eingesetzt werden, unter anderem beispielsweise von den Abfallprodukten 3 vor der thermischen Aufbereitung in der Aufbereitungsvorrichtung 1 entfernte, organische Reste. In einem solchen Drehrohrofenprozess 11 fällt während des Brennens von gemahlenen Ausgangsstoffen zu Zementklinker heißes Abgas an, welches zum Beispiel eine Temperatur von 900 °C - 1300 °C aufweisen kann, und welches heiße Abgas sich daher gut für das Verfahren eignet. Des Weiteren kann das heiße Abgas, abhängig von der Entnahmestelle aus dem Drehrohrofenprozess 11 einen nur sehr geringen Sauerstoffanteil, beispielsweise weniger als 3 Gew. % Sauerstoff, aufweisen.

Selbstverständlich kann eine Zementklinkerproduktionsanlage 10 weitere, an sich bekannte Prozessvorrichtungen, wie etwa Mahl- Heiz- und Kühl und Lagervorrichtungen umfassen, welche aus Übersichtlichkeitsgründen in der Fig.1 nicht dargestellt sind. Solche Zementklinkerproduktionsanlagen sind aus der einschlägigen Fachliteratur hinreichend bekannt, sodass eine nähergehende Erläuterung erübrigt werden kann. Im Folgenden wird zur Darstellung des Verfahrens eine Zementklinkerproduktionsanlage 10 als Beispiel für die nebengeordnete Prozessanlag 8 herangezogen, wobei vermerkt wird, dass auch ein heißes Abgas aus thermischen Produktionsprozessen oder Stoffverarbeitungsprozessen 7 anderer, nebengeordneter Prozessanlagen 8 grundsätzlich für das Verfahren zur Rückgewinnung von Wertstoffen 2 aus Abfallprodukten 3 geeignet sein können.

Grundsätzlich kann das heiße Abgas aus der nebengeordneten Prozessanlage 8, beispielsweise aus der in der Fig. 1 ausschnittsweise dargestellten Zementklinkerproduktionsanlage 10, direkt dem Reaktionsraum 9 der thermischen Aufbereitungsvorrichtung 1 zugeführt werden, was einer sogenannten Direktbeheizung entspricht. Hierbei kann zum Beispiel vorgesehen sein, dass das heiße Abgas dem Reaktionsraum 9 während der thermischen Aufbereitung der Abfallprodukte 3 im Gegenstrom bezüglich einer Hindurchführungsrichtung 13 für die Abfallprodukte 3 zugeführt wird. Eine dementsprechende Zuführung des heißen Abgases von dem thermischen Produktionsprozess oder Stoffverarbeitungsprozess 7 der nebengeordneten Prozessanlage 8 ist in der Fig.1 anhand der schematisch mit durchgezogenen Linien dargestellten Gasleitungen 14 veranschaulicht, wobei eine Strömungsrichtung bzw. Zuführungsrichtung des heißen Abgases von dem beispielhaft dargestellten Drehrohrofenprozess 11 zu der thermischen Aufbereitungsvorrichtung 1 mit den Pfeilen 15 angedeutet ist.

Alternativ ist es aber auch möglich, dass das heiße Abgas während der thermischen Aufbereitung der Abfallprodukte 3 im Gleichstrom bezüglich der Hindurchführungsrichtung 13 für die Abfallprodukte 3 in den Reaktionsraum 9 der thermischen Aufbereitungsvorrichtung 1 zugeführt wird. Die dementsprechende, alternativ zur oben beschriebenen Gegenstromführung erfolgende, Zuführung des heißen Abgases von dem thermischen Produktionsprozess oder Stoffverarbeitungsprozess 7 der nebengeordneten Prozessanlage 8 ist in der Fig.1 anhand der schematisch mit strichpunktierten Linien dargestellten Gasleitungen 16 veranschaulicht. Die Strömungsrichtung des heißen Abgases von dem beispielhaft dargestellten Drehrohrofenprozess 11 zu der thermischen Aufbereitungsvorrichtung 1 ist für die Gleichstromführung mit den Pfeilen 17 angedeutet. Wie des Weiteren in der Fig. 1 angedeutet ist, kann auch vorgesehen sein, dass das heiße Abgas an verschiedenen Entnahmestellen aus dem thermischen Produktionsprozess oder Stoffverarbeitungsprozess 7 der nebengeordneten Prozessanlage 8 bzw. aus dem beispielhaft dargestellten Drehrohrofenprozess 11 der ausschnittsweise dargestellten Zementklinkerproduktionsanlage 10 entnommen werden kann, beispielsweise in Abhängigkeit von einem jeweils gewünschten Sauerstoffgehalt in dem heißen Abgas.

Ganz grundsätzlich kann aber auch eine indirekte Beheizung des Reaktionsraumes 9 der thermischen Aufbereitungsvorrichtung 1 vorgesehen sein, wie dies ebenfalls in der Fig. 1 veranschaulicht ist. In diesem Fall kann die thermische Aufbereitungsvorrichtung 1 eine Beheizungsraum 18 zur indirekten Beheizung des Reaktionsraumes 9 aufweisen. Ein solcher Beheizungsraum 18 kann zum Beispiel in der Art eines Heizmantels am äußeren Umfang des Reaktionsraumes 9 angeordnet sein, beispielsweise den Reaktionsraum 9 vollumfänglich umgeben, wie dies an sich bekannt ist. In der Fig.1 sind zur Zuführung des heißen Abgases aus dem thermischen Produktions- oder Stoffverarbeitungsprozess in den Beheizungsraum 18 vorgesehene Gasleitungen 19 in strichlierten Linien dargestellt. Hierbei kann wiederum vorgesehen sein, dass das heiße Abgas während der thermischen Aufbereitung der Abfallprodukte 3 im Gegenstrom bezüglich der Hindurchführungsrichtung 13 für die Abfallprodukte 3 dem Beheizungsraum 18 für den Reaktionsraum 9 zugeführt wird. Eine Strömungsrichtung bzw. Zuführungsrichtung für das heiße Abgas in den Beheizungsraum 18 für diesen Fall ist in der Fig. 1 anhand der Pfeile 20 angedeutet. Selbstverständlich kann alternativ auch wiederum vorgesehen sein, dass das heiße Abgas während der thermischen Aufbereitung der Abfallprodukte 3 im Gleichstrom bezüglich der Hindurchführungsrichtung 13 für die Abfallprodukte 3 in einen Beheizungsraum 18 für den Reaktionsraum 9 der thermischen Aufbereitungsvorrichtung 1 zugeführt wird. Aus Übersichtlichkeitsgründen ist diese Variante in der Fig. 1 nicht dargestellt.

Wie des Weiteren aus der Fig. 1 erkennbar ist, kann ganz grundsätzlich vorgesehen sein, dass eine Temperatur des heißen Abgases vor dessen Zuführung in die thermische Aufbereitungsvorrichtung 1, beispielsweise mittels eines Wärmetauschers 21 bedarfsabhängig hinsichtlich der aufzubereitenden Abfallprodukte 3, bzw. hinsichtlich der Bestandteile der Abfallprodukte 3, insbesondere deren Wertstoff(e) 2 und/oder organischen Verunreinigung(en) eingestellt wird. Ein solcher Wärmetauscher 21 kann zum Beispiel durch einen luftgekühlten Wärmetauscher, etwa einen Kühlturm, oder auch einen flüssigkeitsdurchströmten, etwa durch Kühlwasser durchströmten Wärmetauscher gebildet sein.

Des Weiteren kann ganz grundsätzlich vorgesehen sein, dass eine der thermischen Aufbereitungsvorrichtung 1 pro Zeiteinheit zugeführte Wärmeenergiemenge durch die der thermischen Aufbereitungsvorrichtung 1 zugeführte Menge an heißem Abgas beeinflusst wird. Eine Regelung bzw. Einstellung der der thermischen Aufbereitungsvorrichtung 1 zugeführten Menge an heißem Abgas, kann in an sich bekannter Art und Weise mittels hierfür geeigneter Mittel, etwa verstellbare Klappen, Ventile und so weiter, bewerkstelligt werden. Eine Beeinflussung der Temperatur des heißen Abgases mittels eines Wärmetauschers 21 ist insbesondere zweckmäßig, wenn die organischen Verunreinigungen in der thermischen Aufbereitungsvorrichtung 1 vorwiegend durch Pyrolyse, also in sauerstoffarmer oder - freier Atmosphäre von den Wertstoffen 2 entfernt werden sollen.

Andererseits Wie in der Fig. 1 schematisch veranschaulicht ist, kann zur thermischen Aufbereitung der Abfallprodukte 3 dem Reaktionsraum 9 der thermischen Aufbereitungsvorrichtung 1 während der thermischen Aufbereitung der Abfallprodukte 3 Frischluft zugeführt werden, wie dies in der Fig. 1 anhand der dargestellten Frischluftleitung 22 schematisch veranschaulicht ist. Die Frischluft kann dem Reaktionsraum im Speziellen zur Verbrennung der organischen Verunreinigungen der Abfallprodukte 3 zugeführt werden. Zur Zuführung der Frischluft kann beispielsweise ein in der Fig. 1 nicht näher dargestelltes Gebläse, oder eine andere Luftzufuhrvorrichtung zum Einsatz kommen. Wie das heiße Abgas aus dem thermischen Produktionsprozess oder Stoffverarbeitungsprozess 7 der nebengeordneten Prozessanlage 8, bzw. wie das heiße Abgas aus dem in der Fig. 1 dargestellten Drehrohrofenprozess 11 der Zementklinkerproduktionsanlage 10, kann auch die Frischluft im Gegenstrom bezüglich der Hindurchführungsrichtung 13 der Abfallprodukte 3 dem Reaktionsraum 9 zugeführt werden, wie in der Fig.1 dargestellt ist. Alternativ kann natürlich die Frischluft auch im Gleichstrom bezüglich der Hindurchführungsrichtung 13 in den Reaktionsraum 9 zugeführt werden.

Ganz grundsätzlich kann auf diese Weise eine dem Reaktionsraum 9 pro Zeiteinheit zugeführte Sauerstoffmenge und/oder eine Temperatur in dem Reaktionsraum 9 während der thermischen Aufbereitung der Abfallprodukte 3, durch die dem Reaktionsraum 9 pro Zeiteinheit zugeführte Menge an Frischluft beeinflusst werden. Auf diese Weise können sowohl die Temperatur im Reaktionsraum 9, als auch die zugeführte Sauerstoffmenge kontrolliert werden, beispielsweise um die organischen Verunreinigungen der Abfallprodukte 3 unter kontrollierten Bedingungen zu verbrennen.

Wie in der Fig. 1 des Weiteren schematisch angedeutet ist, kann der thermischen Aufbereitungsvorrichtung 1 zur thermischen Aufbereitung der Abfallprodukte 3 bedarfsabhängig, insbesondere zum Starten der thermischen Aufbereitung, ein Heizgas aus einer separaten Brennervorrichtung 23 zugeführt werden. Das Heizgas bzw. die Brennervorrichtung 23 kann zum Beispiel beim Hochfahren der thermischen Aufbereitungsvorrichtung 1 eingesetzt werden, oder kann die thermischen Aufbereitungsvorrichtung 1 im Falle von zu niedriger Temperatur in dem Reaktionsraum 9 in den Reaktionsraum 9 eingeleitet werden.

Durch die thermische Aufbereitung der Abfallprodukte 3, bzw. durch die Pyrolyse und/oder Verbrennung der organischen Verunreinigungen der Abfallprodukte 3, wird während der thermischen Aufbereitung in dem Reaktionsraum 9 ein Aufbereitungsabgas gebildet. Je nach Sauerstoffgehalt in der thermischen Aufbereitungsvorrichtung 1 bzw. deren Reaktionsraum 9 kann sich hierbei ein Aufbereitungsabgas mit vorwiegend durch Pyrolyse und/oder Verbrennung gebildeten Bestandteilen bzw. chemischen Verbindungen bilden. Ein unter sauerstoffarmer oder -freier Atmosphäre vorwiegend gebildetes Aufbereitungsabgas bzw. Pyrolyseabgas kann typischerweise einen hohen Anteil an verbrennbaren, gasförmigen Stoffen bzw. Verbindungen aufweisen, kann also einen hohen Heizwert besitzen.

Im Falle einer vorwiegenden Verbrennung der organischen Verunreinigungen in sauerstoffreicher Atmosphäre kann in dem Reaktionsraum 9 ein vorwiegend Verbrennungsbestandteile aufweisendes Aufbereitungsabgas entstehen. Im Falle einer vorwiegenden Verbrennung der organischen Verunreinigungen kann außerdem vorgesehen sein, dass eine Temperatur eines durch vorwiegende Verbrennung der organischen Bestandteile entstehenden Verbrennungsabgases gegenüber einer Temperatur des zugeführten, heißen Abgases aus dem thermischen Produktionsprozess oder Stoffverarbeitungsprozess 7, durch die Verbrennung der organischen Verunreinigungen in der thermischen Aufbereitungsvorrichtung 1 erhöht wird.

Sowohl im Falle einer vorwiegenden Pyrolyse als auch im Falle einer vorwiegenden Verbrennung der organischen Verunreinigungen, kann das während der thermischen Aufbereitung der Abfallprodukte 3 gebildete Aufbereitungsabgas vorteilhafte Eigenschaften aufweisen, sodass eine Nutzung bzw. Verwertung dieses Aufbereitungsabgases sinnvoll sein kann. Es kann zum Beispiel vorgesehen sein, dass ein durch die thermische Aufbereitung der Abfallprodukte 3 entstehendes Aufbereitungsabgas wenigstens teilweise dem thermischen Produktionsprozess oder Stoffverarbeitungsprozess 7 der nebengeordneten Prozessanlage 8 zugeführt wird, wie dies in der Fig. 1 dargestellt ist.

Bei Zuführung des heißen Abgases im Gegenstrom zur Hindurchführungsrichtung 13 in den Reaktionsraum 9, kann ein in dem Reaktionsraum 9 entstehendes Aufbereitungsabgas wieder dem als Ausführungsbeispiel für einen thermischen Produktionsprozess oder Stoffverarbeitungsprozess 7 dargestellten Drehrohrofenprozess 11 zugeführt werden, wie dies anhand der Gasleitungen 24 in der Fig. 1 veranschaulicht ist. Eine Strömungsrichtung des Aufbereitungsabgases für diesen Fall ist mittels den Pfeilen 25 schematisch angedeutet. Auch im Falle einer Zuführung des heißen Abgases im Gleichstrom zur Hindurchführungsrichtung 13 in den Reaktionsraum 9, kann ein in dem Reaktionsraum 9 entstehendes Aufbereitungsabgas wieder dem Drehrohrofenprozess 11 zugeführt werden. Dies ist in der Fig. 1 anhand der in strichpunktierten Linien dargestellten Gasleitungen 26 veranschaulicht, wobei eine Strömungsrichtung des Aufbereitungsgases mittels den Pfeilen 27 veranschaulicht ist. Wie des Weiteren in der Fig. 1 dargestellt ist, kann das durch die thermische Aufbereitung der Abfallprodukte 3 entstehende Aufbereitungsabgas vor der Zuführung in den thermischen Produktionsprozess oder Stoffverarbeitungsprozess 7 der nebengeordneten Prozessanlage 8 bzw. Zementklinkerproduktionsanlage 10 über eine Filtervorrichtung 28 geführt werden. Mittels einer solchen Filtervorrichtung 28 können allenfalls mit dem Aufbereitungsabgas mitgeschleppte, flüssige oder feste Pyrolyserückstände und/oder Ascherückstände aus dem Aufbereitungsabgas entfernt werden.

Auch bei Führung des heißen Abgases durch den Beheizungsraum 18 der thermischen Aufbereitungsvorrichtung 1, siehe Gasleitungen 19, kann ein in dem Reaktionsraum 9 während der thermischen Aufbereitung entstehendes Aufbereitungsabgas dem Drehrohrofenprozess 11 zugeführt werden, zum Beispiel wiederum via die Gasleitungen 24 oder die Gasleitungen 26. Das durch den Beheizungsraum 18 geführte, heiße Abgas selbst, kann durch Übertragung von Wärmeenergie an den Reaktionsraum 9 während der thermischen Aufbereitung abgekühlt werden. Heißes Abgas aus dem Beheizungsraum 18 kann zum Beispiel nach der Durchführung durch den Beheizungsraum 18 über eine bestehende Abgasabführungsvorrichtung 29 der nebengeordneten Prozessanlage 8 abgeführt werden, wie dies schematisch in der Fig. 1 anhand der strichliert dargestellten Gasleitung 30 veranschaulicht ist. Alternativ kann aber auch ein heißes Abgas nach Hindurchführung durch einen Beheizungsraum grundsätzlich wiederverwendet werden, beispielsweise in einem anderen, thermischen Prozess der nebengeordneten Prozessanlage 8.

Ganz grundsätzlich kann auch ein heißes Abgas aus dem thermischen Produktion- oder Stoffverarbeitungsprozess 7 selbst, zum Beispiel dem in der Fig. 1 dargestellten Drehrohrofenprozess 11 zumindest teilweise über die bestehende Abgasreinigungsvorrichtung 29 der nebengeordneten Prozessanlage 8 bzw. der ausschnittsweise dargestellten Zementklinkerproduktionsanlage 10 abgeführt werden, wie dies anhand der Gasleitung 31 in der Fig. 1 angedeutet ist. Zum Beispiel kann überschüssiges, heißes Abgas aus dem Produktions- oder Stoffverarbeitungsprozess 7, wenn für die thermische Aufbereitung nur wenig heißes Abgas aus dem Drehrohrofenprozess 11 benötigt wird, oder wenn beispielsweise keine thermische Aufbereitung von Abfallprodukten 3 durchgeführt wird, über die Abgasabführungsvorrichtung 29 abgeführt werden. Eine Abgasabführungsvorrichtung 29 kann typischerweise eine Kühlvorrichtung zur Kühlung, sowie allenfalls eine oder mehrere Filtervorrichtung(en) bzw. weitere Abgasreinigungsvorrichtung(en) oder chemische Stoffumwandlungsvorrichtungen zur Reinigung von Abgas aufweisen.

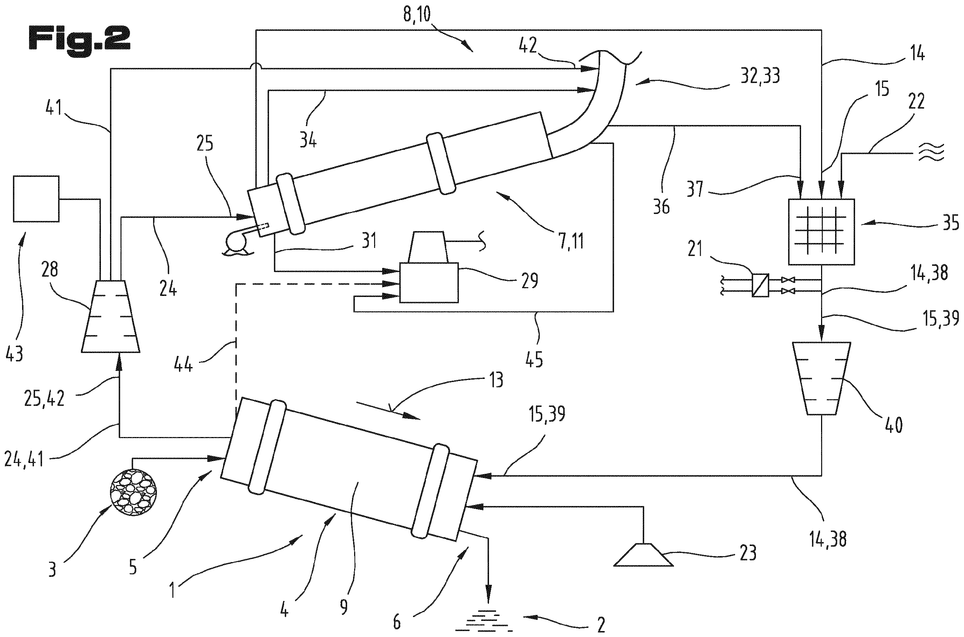

In der Fig. 2 ist eine weitere und gegebenenfalls für sich eigenständige Ausführungsform des Verfahrens zur Rückgewinnung von Wertstoffen 2 aus Abfallprodukten 3 schematisch dargestellt, wobei für gleiche Teile gleiche Bezugszeichen wie in der vorangegangenen Fig. 1 verwendet werden. Um unnötige Wiederholungen zu vermeiden, wird auf die detaillierte Beschreibung in der vorangegangenen Fig. 1 hingewiesen bzw. Bezug genommen.

In der Fig. 2 ist wiederum eine thermische Aufbereitungsvorrichtung 1, im Speziellen ein Drehrohrofen 4 mit einem Reaktionsraum 9, in welchem organische Verunreinigungen von Abfallprodukten 3 pyrolisiert und/oder verbrannt werden, dargestellt. Die Abfallprodukte werden wie bei dem in der Fig. 1 dargestellten Ausführungsbeispiel in einem Beschickungsbereich 5 in den Reaktionsraum 9 aufgegeben, und die Wertstoffe, sowie allenfalls Pyrolyse- und/oder Verbrennungsrückstände in einem Austragsbereich 6 aus dem Reaktionsraum 9 ausgegeben.

Der thermischen Aufbereitungsvorrichtung 1 wird zur thermischen Aufbereitung der Abfallprodukte 3 wiederum ein heißes Abgas aus mindestens einem thermischen Produktionsprozess oder Stoffverarbeitungsprozess 7 einer nebengeordneten Prozessanlage 8 zugeführt. Vorzugweise wird das heiße Abgas direkt dem Reaktionsraum 9, bzw. Pyrolyse- und/oder Verbrennungsraum der Aufbereitungsvorrichtung 1 zugeführt, wie dies aus der Fig. 2 ersichtlich ist. Ein Beheizungsraum 18, siehe Fig. 1, ist in der Fig. 2 aus Übersichtlichkeitsgründen nicht dargestellt.

In der Fig. 2 ist als Beispiel für einen Produktions- oder Stoffverarbeitungsprozess 7 wiederum ein Drehrohrofenprozess 11 einer, ausschnittsweise veranschaulichten, nebengeordneten Zementklinkerproduktionsanlage 10 dargestellt. Ein solcher Produktionsprozess bzw. Stoffverarbeitungsprozess 7 eignet sich vor allem wegen der hohen Temperaturen der heißen Abgase besonders für die thermische Aufbereitung der Abfallprodukte 3.

Bei dem in der Fig. 2 dargestellten Ausführungsbeispiel ist rein beispielhaft eine Zuführung des heißen Abgases im Gegenstrom zu der Hindurchführungsrichtung 13 der Abfallprodukte 3 in den Reaktionsraum 9 gezeigt, bzw. wiederum durch Gasleitungen 14 und Pfeile 15 veranschaulicht. Selbstverständlich wäre es auch bei dem in der Fig. 2 dargestellten Ausführungsbeispiel möglich, dem Reaktionsraum 9 das heiße Abgas im Gleichstrom bezüglich der Hindurchführungsrichtung 13 zuzuführen, wie dies in der Fig. 1 anhand der Gasleitungen 16 und Pfeile 17 gezeigt ist.

Bei dem Ausführungsbeispiel gemäß der Fig. 2, kann vorgesehen sein, dass der thermischen Aufbereitungsvorrichtung 1 zur thermischen Aufbereitung der Abfallprodukte 3 ein weiteres, heißes Abgas aus einem weiteren thermischen Produktionsprozess oder Stoffverarbeitungsprozess 32 der nebengeordneten Prozessanlage 8 zugeführt wird. Beispielsweise kann der thermischen Aufbereitungsanlage 1 heißes Abgas aus dem thermischen Drehrohrofenprozess 11 der nebengeordneten Zementklinkerproduktionsanlage 10, und/oder ein heißes Abgas aus einem, dem Drehrohrofenprozess 11 vorgelagerten, thermischen Kalzinationsprozess 33 der nebengeordneten Zementklinkerproduktionsanlage 10 zugeführt werden, wie dies in der Fig. 2 veranschaulicht ist. Ganz grundsätzlich kann hierbei vorgesehen sein, dass der thermischen Aufbereitungsvorrichtung 1 entweder heißes Abgas aus dem thermischen Produktions- oder Stoffverarbeitungsprozess 7 oder heißes Abgas aus dem weiteren, thermischen Produktions- oder Stoffverarbeitungsprozess 32, oder dass heißes Abgas aus dem thermischen Produktions- oder Stoffverarbeitungsprozess 7 und heißes Abgas aus dem weiteren, thermischen Produkti- ons- oder Stoffverarbeitungsprozess 32, zugeführt wird.

Auf diese Weise kann auch eine Temperatur in dem Reaktionsraum 9 während der thermischen Aufbereitung der Abfallprodukte 3 beeinflusst werden, da heiße Abgase mit unterschiedlichen Temperatur gemeinsam oder einzeln der thermischen Aufbereitungsvorrichtung 1 zugeführt werden können. Typischerweise kann in einer Zementklinkerproduktionsanlage 10 heißes Abgas aus dem Drehrohrofenprozess 11 dem Kalzinationsprozess 33 zugeführt werden, wobei ein heißes Abgas aus dem Kalzinationsprozess 33 ein niedrigeres Temperaturniveau aufweisen kann, als ein heißes Abgas aus dem Drehrohrofenprozess 11. Eine Zuführung des heißen Abgases aus dem Drehrohrofenprozess 11 in den Kalzinationsprozess 33 ist in der Fig. 2 durch die schematisch dargestellte Gasleitung 34 veranschaulicht.

Wie des Weiteren in der Fig. 2 veranschaulicht ist, kann das heiße Abgas aus dem thermischen Produktionsprozess oder Stoffverarbeitungsprozess 7 und/oder das heiße Abgas aus dem weiteren thermischen Produktionsprozess oder Stoffverarbeitungsprozess 32 vor der Zuführung in die thermische Aufbereitungsvorrichtung 1 über eine Gasmischvorrichtung 35 geführt werden. Eine Zuführung von heißem Abgas aus dem weiteren, thermischen Produktionsprozess oder Stoffverarbeitungsprozess 32, bzw. dem in der Fig. 2 beispielhaft dargestellten Kalzinationsprozess 33 in die Gasmischvorrichtung 35, ist in der Fig. 2 durch die Gasleitung 36 und Pfeil 37 veranschaulicht. Bei der Verwendung einer Gasmischvorrichtung 35 kann das heiße Abgas aus dem thermischen Produktionsprozess oder Stoffverarbeitungsprozess 7 und/oder das heiße Abgas aus dem weiteren, thermischen Produktionsprozess oder Stoffverarbeitungsprozess 32 der thermischen Aufbereitungsvorrichtung 1 über eine gemeinsame Gasleitung 38 zugeführt werden, wie dies auch anhand der Pfeile 39 in der Fig. 2 angedeutet ist.

Wie ebenfalls in der Fig. 2 dargestellt ist, kann das heiße Abgas aus dem thermischen Produktionsprozess oder Stoffverarbeitungsprozess 7 und/oder aus dem weiteren, thermischen Produktionsprozess oder Stoffverarbeitungsprozess 32 vor der Zuführung in die thermische Aufbereitungsvorrichtung 1 zur Temperaturbeeinflussung optional über einen Wärmetauscher 21, und zur Reinigung über eine Filtervorrichtung 40, insbesondere einen Hochtemperaturfilter, geführt werden. Ganz generell kann wiederum vorgesehen sein, dass eine der thermischen Aufbereitungsvorrichtung 1 pro Zeiteinheit zugeführte Wärmeenergiemenge durch die der thermischen Aufbereitungsvorrichtung 1 zugeführte Menge an heißem Abgas beeinflusst wird. Des Weiteren ist in der Fig. 2 wiederum eine Brennervorrichtung 23 zur bedarfsabhängigen, zusätzlichen Zuführung von Heizgas in die thermische Aufbereitungsvorrichtung 1 gezeigt.

Bei dem in der Fig. 2 schematisch dargestellten Ausführungsbeispiel, kann vorgesehen sein, dass zur thermischen Aufbereitung der Abfallprodukte 3 dem heißen Abgas oder den heißen Abgasen vor der Zuführung in den Reaktionsraum 9 der thermischen Aufbereitungsvorrichtung 1 Frischluft beigemengt wird. Im Besonderen kann hierbei vorgesehen sein, dass das heiße Abgas oder die heißen Abgase und die Frischluft vor der Zuführung in den Reaktionsraum 9 in der Gasmischvorrichtung 35 gemischt werden. Die Beimengung von Frischluft zu dem oder den heißen Abgas(en) ist in der Fig. 2 wiederum durch die Frischluftleitung 22 veranschaulicht. Zur Zufuhr der Frischluft kann zum Beispiel eine in der Fig. 2 nicht näher dargestellte Frischluftzufuhrvorrichtung, wie etwa ein Gebläse verwendet werden. Durch die Beimengung von Frischluft, bzw. den in der Frischluft enthaltenen Sauerstoff, kann auch eine Verbrennungsrate für die organischen Verunreinigungen während der thermischen Aufbereitung der Abfallprodukte 3 beeinflusst werden. Hierbei kann wiederum vorgesehen sein, dass eine Temperatur eines durch vorwiegende Verbrennung der organischen Bestandteile entstehenden Verbrennungsabgases gegenüber einer Temperatur des oder der zugeführten, heißen Abgase(s) aus dem thermischen Produktionsprozess oder Stoffverarbeitungsprozess 7 und/oder aus dem weiteren thermischen Produktions- oder Stoffverarbeitungsprozess 32, durch die Verbrennung der organischen Verunreinigungen in der thermischen Aufbereitungsvorrichtung 1 erhöht wird.

In weiterer Folge kann dann wiederum vorgesehen sein, dass eine dem Reaktionsraum 9 pro Zeiteinheit zugeführte Sauerstoffmenge und/oder eine Temperatur in dem Reaktionsraum 9 während der thermischen Aufbereitung der Abfallprodukte 3, durch die pro Zeiteinheit zugeführte Menge an Frischluft beeinflusst wird. So kann etwa eine Temperatur des heißen Abgases vor dessen Zuführung in die thermische Aufbereitungsvorrichtung 1 durch Zuführung von Frischluft, bedarfsabhängig hinsichtlich der aufzubereitenden Abfallprodukte 3 eingestellt werden. Optional kann hierzu zusätzlich, oder auch stattdessen der Wärmetauscher 21 verwendet werden.

Ein durch Pyrolyse und/oder Verbrennung der organischen Verunreinigungen während der thermischen Aufbereitung der Abfallprodukte 3 entstehendes Aufbereitungsabgas kann wenigstens teilweise dem thermischen Produktionsprozess oder Stoffverarbeitungsprozess 7 der nebengeordneten Prozessanlage 8, und/oder dem weiteren, thermischen Prozess 32 der nebengeordneten Prozessanlage 8 zugeführt werden. Bei dem in der Fig. 2 dargestellten Ausführungsbeispiel kann beispielsweise vorgesehen sein, dass das durch die thermische Aufbereitung der Abfallprodukte 3 entstehende Aufbereitungsabgas dem thermischen Drehrohrofenprozess 11, und/oder dem, dem Drehrohrofenprozess 11 vorgelagerten, thermischen Kalzinationsprozess 33 zugeführt wird. Eine Zuführung des Aufbereitungsabgases in den thermischen Produktions- oder Stoffverarbeitungsprozess, bzw. den beispielhaft dargestellten Drehrohrofenprozess 11 ist hierbei in der Fig. 2 wiederum anhand der Gasleitungen 24 und Pfeile 25 veranschaulicht. Eine Zuführung des Aufbereitungsabgases in den weiteren thermischen Prozess 32 bzw. den beispielhaft dargestellten Kalzinationsprozess 33 ist anhand der Gasleitungen 41 und Pfeile 42 schematisch angedeutet. Grundsätzlich ist es auch denkbar, dass das Aufbereitungsabgas aus dem Reaktionsraum 9 der thermischen Aufbereitungsanlage 1 einem thermischen Prozess einer weiteren nebengeordneten Prozessanlage 43 zugeführt wird, wie dies ebenfalls in der Fig. 2 angedeutet ist. Bei der weiteren, nebengeordneten Prozessanlage 43 kann es sich zum Beispiel um eine Müllverbrennungsanlage oder eine Stromerzeugungsanlage handeln.

Wie aus der Fig. 2 des Weiteren ersichtlich ist, kann das durch die thermische Aufbereitung der Abfallprodukte 3 entstehende Aufbereitungsabgas vor der Zuführung in den thermischen Produktionsprozess oder Stoffverarbeitungsprozess 7 der nebengeordneten Prozessanlage 8, oder in den weiteren, thermischen Prozess 32 der nebengeordneten Prozessanlage 8 bzw. der Zementklinkerproduktionsanlage 10, oder in den thermischen Prozess der weiteren, nebengeordneten Prozessanlage 43, über eine Filtervorrichtung 28 geführt werden.

Vorzugsweise kann das in der thermischen Aufbereitungsvorrichtung 1 während der thermischen Aufbereitung der Abfallprodukte 3 entstehende Aufbereitungsabgas grundsätzlich für andere thermische Prozesse eingesetzt werden. Wenn hierfür kein Bedarf besteht oder die Verwendung des Aufbereitungsabgases nicht möglich ist, beispielsweise aufgrund zu geringer Temperatur, kann grundsätzlich aber auch vorgesehen sein, dass das durch die thermische Aufbereitung der Abfallprodukte 3 entstehendes Aufbereitungsabgas zumindest teilweise über eine bestehende Abgasabführungsvorrichtung 29 der nebengeordneten Prozessanlage 8 abgeführt wird. Dies ist anhand der strichliert dargestellten Gasleitung 44 in der Fig. 2 veranschaulicht.

Wie des Weiteren in Fig. 2 durch die Gasleitung 31 angedeutet ist, kann aber auch heißes Abgas aus dem thermischen Produktions- oder Stoffverarbeitungsprozess 7, also dem beispielhaft dargestellten Drehrohrofenprozess 11 zumindest teilweise über die Abgasabführungsvorrichtung 29 abgeführt werden. Alternativ oder zusätzlich kann aber auch Abgas aus dem weiteren thermischen Prozess 32, also dem beispielhaft hierfür dargestellten Kalzinationsprozess 33, zumindest teilweise über die Abgasabführungsvorrichtung 29 abgeführt werden, wie dies anhand der Gasleitung 45 in der Fig. 2 veranschaulicht ist.

Zur Leitung bzw. Förderung, oder zur Unterstützung der Leitung der Gase durch die in den Fig. 1 und Fig.2 schematisch dargestellten Gasleitungen 14, 16, 19, 22, 24, 26, 30, 31, 34, 36, 38, 41, 44, 45 können im Bedarfsfall an sich bekannte Gasfördervorrichtungen verwendet bzw. eingesetzt werden.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Aufbereitungsvorrichtung | 31 | Gasleitung |
| 2 | Wertstoff | 32 | Prozess |
| 3 | Abfallprodukte | 33 | Kalzinationsprozess |
| 4 | Drehrohrofen | 34 | Gasleitung |
| 5 | Beschickungsbereich | 35 | Gasmischvorrichtung |
| 6 | Austragsbereich | 36 | Gasleitung |
| 7 | Prozess | 37 | Pfeil |
| 8 | Prozessanlage | 38 | Gasleitung |
| 9 | Reaktionsraum | 39 | Pfeil |
| 10 | Zementklinkerproduktionsanlage | 40 | Filtervorrichtung |
| 11 | Drehrohrofenprozess | 41 | Gasleitung |
| 12 | Brennstoffsilo | 42 | Pfeil |
| 13 | Hindurchführungsrichtung | 43 | Prozessanlage |
| 14 | Gasleitung | 44 | Gasleitung |
| 15 | Pfeil | 45 | Gasleitung |
| 16 | Gasleitung | | |
| 17 | Pfeil | | |
| 18 | Beheizungsraum | | |
| 19 | Gasleitung | | |
| 20 | Pfeil | | |
| 21 | Wärmetauscher | | |
| 22 | Frischluftleitung | | |
| 23 | Brennervorrichtung | | |
| 24 | Gasleitung | | |
| 25 | Pfeil | | |
| 26 | Gasleitung | | |
| 27 | Pfeil | | |
| 28 | Filtervorrichtung | | |
| 29 | Abgasabführungsvorrichtung | | |
| 30 | Gasleitung | | |

## Patentansprüche

1. Verfahren zur Rückgewinnung von Wertstoffen (2) aus Abfallprodukten (3),
welche Abfallprodukte (3) organischen Verunreinigungen aufweisen,
wobei die Abfallprodukte (3) einer thermischen Aufbereitung in einer thermischen Aufbereitungsvorrichtung (1) unterzogen werden, während welcher thermischen Aufbereitung die organischen Verunreinigungen zumindest größtenteils pyrolisiert und/oder verbrannt werden,
wobei die Abfallprodukte in einem Beschickungsbereich (5) in einen Reaktionsraum (9) aufgegeben werden und die Wertstoffe, sowie allenfalls Pyrolyse- und/oder Verbrennungsrückstände in einem Austragsbereich (6) aus dem Reaktionsraum (9) ausgegeben werden,
**dadurch gekennzeichnet, dass**
der thermischen Aufbereitungsvorrichtung (1) zur thermischen Aufbereitung der Abfallprodukte (3) ein heißes Abgas aus mindestens einem thermischen Produktionsprozess oder Stoffverarbeitungsprozess (7, 32) einer nebengeordneten Prozessanlage (8) zugeführt wird,
wobei eine maximale Temperatur in einem Reaktionsraum (9) der thermischen Aufbereitungsvorrichtung (1) während der thermischen Aufbereitung derart gewählt wird, dass die rückzugewinnenden Wertstoffe während der thermischen Aufbereitung im festen Aggregatszustand vorliegen.

2. Verfahren nach Anspruch 1, **dadurch gekennzeichnet, dass** das heiße Abgas während der thermischen Aufbereitung der Abfallprodukte (3) im Gegenstrom bezüglich einer Hindurchführungsrichtung (13) für die Abfallprodukte (3) einem Reaktionsraum (9) der thermischen Aufbereitungsvorrichtung (1) oder einem Beheizungsraum (18) für den Reaktionsraum (9) zugeführt wird.

3. Verfahren nach Anspruch 1, **dadurch gekennzeichnet, dass** das heiße Abgas während der thermischen Aufbereitung der Abfallprodukte (3) im Gleichstrom bezüglich einer Hindurchführungsrichtung (13) für die Abfallprodukte (3) einem Reaktionsraum (9) der thermischen Aufbereitungsvorrichtung (1) oder einem Beheizungsraum (18) für den Reaktionsraum (9) zugeführt wird.

4. Verfahren nach einem der vorhergehenden Ansprüche, **dadurch gekennzeichnet, dass** zur thermischen Aufbereitung der Abfallprodukte (3) einem Reaktionsraum (9) der thermischen Aufbereitungsvorrichtung (1) während der thermischen Aufbereitung der Abfallprodukte (3) Frischluft zugeführt wird.

5. Verfahren nach einem der vorhergehenden Ansprüche, **dadurch gekennzeichnet, dass** zur thermischen Aufbereitung der Abfallprodukte (3) dem heißen Abgas vor der Zuführung in einen Reaktionsraum (9) der thermischen Aufbereitungsvorrichtung (1) Frischluft beigemengt wird.

6. Verfahren nach Anspruch 5, **dadurch gekennzeichnet, dass** das heiße Abgas und die Frischluft vor der Zuführung in den Reaktionsraum (9) in einer Gasmischvorrichtung (35) gemischt werden.

7. Verfahren nach einem der Ansprüche 4 bis 6, **dadurch gekennzeichnet, dass** eine dem Reaktionsraum (9) pro Zeiteinheit zugeführte Sauerstoffmenge und/oder eine Temperatur in dem Reaktionsraum (9) während der thermischen Aufbereitung der Abfallprodukte (3), durch die pro Zeiteinheit zugeführte Menge an Frischluft beeinflusst wird.

8. Verfahren nach einem der vorhergehenden Ansprüche, **dadurch gekennzeichnet, dass** eine Temperatur des heißen Abgases vor dessen Zuführung in die thermische Aufbereitungsvorrichtung (1), insbesondere mittels eines Wärmetauschers (21) oder durch Zuführung von Frischluft, bedarfsabhängig hinsichtlich der aufzubereitenden Abfallprodukte (3) eingestellt wird.

9. Verfahren nach einem der vorhergehenden Ansprüche, **dadurch gekennzeichnet, dass** eine der thermischen Aufbereitungsvorrichtung (1) pro Zeiteinheit zugeführte Wärmeenergiemenge durch die der thermischen Aufbereitungsvorrichtung (1) zugeführte Menge an heißem Abgas beeinflusst wird.

10. Verfahren nach einem der vorhergehenden Ansprüche, **dadurch gekennzeichnet, dass** der thermischen Aufbereitungsvorrichtung (1) zur thermischen Aufbereitung der Abfallprodukte (3) ein heißes Abgas aus einem weiteren thermischen Produktionsprozess oder Stoffverarbeitungsprozess (32, 7) der nebengeordneten Prozessanlage (8) zugeführt wird.

11. Verfahren nach Anspruch 10, **dadurch gekennzeichnet, dass** das heiße Abgas aus dem thermischen Produktionsprozess oder Stoffverarbeitungsprozess (7, 32) und/oder das heiße Abgas aus dem weiteren thermischen Produktionsprozess oder Stoffverarbeitungsprozess (32, 7) vor der Zuführung in die thermische Aufbereitungsvorrichtung (1) über eine Gasmischvorrichtung (35) geführt werden.

12. Verfahren nach einem der vorhergehenden Ansprüche, **dadurch gekennzeichnet, dass** der thermischen Aufbereitungsvorrichtung (1) zur thermischen Aufbereitung der Abfallprodukte (3) bedarfsabhängig, insbesondere zum Starten der thermischen Aufbereitung, ein Heizgas aus einer separaten Brennervorrichtung (23) zugeführt wird.

13. Verfahren nach einem der vorhergehenden Ansprüche, **dadurch gekennzeichnet, dass** eine Temperatur eines durch vorwiegende Verbrennung der organischen Bestandteile entstehenden Verbrennungsabgases gegenüber einer Temperatur des zugeführten, heißen Abgases aus dem thermischen Produktionsprozess oder Stoffverarbeitungsprozess (7, 32), durch die Verbrennung der organischen Verunreinigungen in der thermischen Aufbereitungsvorrichtung (1) erhöht wird.

14. Verfahren nach einem der vorhergehenden Ansprüche, **dadurch gekennzeichnet, dass** ein durch die thermische Aufbereitung der Abfallprodukte (3) entstehendes Aufbereitungsabgas wenigstens teilweise dem thermischen Produktionsprozess oder Stoffverarbeitungsprozess (7, 32) der nebengeordneten Prozessanlage (8), und/oder einem weiteren, thermischen Prozess (32, 7) der nebengeordneten Prozessanlage (8), und/oder einem thermischen Prozess einer weiteren nebengeordneten Prozessanlage (43) zugeführt wird.

15. Verfahren nach Anspruch 14, **dadurch gekennzeichnet, dass** das durch die thermische Aufbereitung der Abfallprodukte (3) entstehende Aufbereitungsabgas vor der Zuführung in den thermischen Produktionsprozess oder Stoffverarbeitungsprozess (7, 32) der nebengeordneten Prozessanlage (8), oder in den weiteren, thermischen Prozess (32, 7) der nebengeordneten Prozessanlage, oder in den thermischen Prozess einer weiteren nebengeordneten Prozessanlage (43), über eine Filtervorrichtung (28) geführt wird.

16. Verfahren nach einem der vorhergehenden Ansprüche, **dadurch gekennzeichnet, dass** der thermischen Aufbereitungsvorrichtung (1) ein heißes Abgas aus einem thermischen Prozess (7) einer nebengeordneten Prozessanlage (8), in welchem thermischen Prozess (7) Materialien verbrannt werden, zugeführt wird.

17. Verfahren nach einem der vorhergehenden Ansprüche, **dadurch gekennzeichnet, dass** der thermischen Aufbereitungsvorrichtung (1) ein heißes Abgas aus einem thermischen Drehrohrofenprozess (11) einer nebengeordneten Zementklinkerproduktionsanlage (10), und/oder ein heißes Abgas aus einem, dem Drehrohrofenprozess (11) vorgelagerten, thermischen Kalzinationsprozess (33) der nebengeordneten Zementklinkerproduktionsanlage (10) zugeführt wird.

18. Verfahren nach Anspruch 17, **dadurch gekennzeichnet, dass** ein durch die thermische Aufbereitung der Abfallprodukte (3) entstehendes Aufbereitungsabgas dem thermischen Drehrohrofenprozess (11), und/oder dem, dem Drehrohrofenprozess (11) vorgelagerten, thermischen Kalzinationsprozess (33) zugeführt wird.

19. Verfahren nach einem der vorhergehenden Ansprüche, **dadurch gekennzeichnet, dass** ein durch die thermische Aufbereitung der Abfallprodukte (3) entstehendes Aufbereitungsabgas zumindest teilweise über eine bestehende Abgasabführungsvorrichtung (29) der nebengeordneten Prozessanlage (8) abgeführt wird.

## Claims

1. A method for recovering recyclable materials (2) from waste products (3), which waste products (3) have organic impurities, wherein the waste products (3) are subjected to thermal processing in a thermal processing device (1), during which thermal processing, the organic impurities are at least largely pyrolyzed and/or burnt, wherein, in a charging region (5), the waste products are charged into a reaction chamber (9) and the recyclable materials and potentially pyrolysis and/or combustion residues are discharged out of the reaction chamber (9) in a discharge region (6)
**characterized in that**
a hot exhaust gas from at least one thermal production process or material treatment process (7, 32) of a coordinated process plant (8) is introduced into the thermal processing device (1) for thermally processing the waste products (3), wherein, during the thermal processing a maximum temperature is selected in a reaction chamber (9) of the thermal processing device (1) such that the recyclable materials to be recovered during the thermal processing are present in a solid state.

2. The method according to claim 1, **characterized in that** during the thermal processing of the waste products (3), the hot exhaust gas is introduced into a reaction chamber (9) of the thermal processing device (1) or a heating chamber (18) for the reaction chamber (9) in a counter stream with respect to a pass-through direction (13) for the waste products (3).

3. The method according to claim 1, **characterized in that** during the thermal processing of the waste products (3), the hot exhaust gas is introduced into a reaction chamber (9) of the thermal processing device (1) or a heating chamber (18) for the reaction chamber (9) in a stream following a pass-through direction (13) for the waste products (3).

4. The method according to one of the preceding claims, **characterized in that** for thermally processing the waste products (3), fresh air is introduced into a reaction chamber (9) of the thermal processing device (1) during the thermal processing of the waste products (3).

5. The method according to one of the preceding claims, **characterized in that** for thermally processing the waste products (3), fresh air is mixed in with the hot exhaust gas prior to being introduced into a reaction chamber (9) of the thermal processing device (1).

6. The method according to claim 5, **characterized in that** the hot exhaust gas and the fresh air are mixed in a gas mixing device (35) prior to being introduced into the reaction chamber (9).

7. The method according to one of claims 4 to 6, **characterized in that** an amount of oxygen introduced into the reaction chamber (9) per time unit and/or a temperature in the reaction chamber (9) during the thermal processing of the waste products (3) is influenced by the amount of fresh air introduced per time unit.

8. The method according to one of the preceding claims, **characterized in that** a temperature of the hot exhaust gas is adjusted with respect to the waste products (3) to be treated as needed prior to being introduced into the thermal processing device (1), in particular by means of a heat exchanger (21) or by introducing fresh air.

9. The method according to one of the preceding claims, **characterized in that** an amount of thermal energy introduced into the thermal processing device (1) per time unit is influenced by the amount of hot exhaust gas introduced into the thermal processing device (1).

10. The method according to one of the preceding claims, **characterized in that** a hot exhaust gas from a further thermal production process or material treatment process (32, 7) of the coordinated process plant (8) is introduced into the thermal processing device (1) for thermally processing the waste products (3).

11. The method according to claim 10, **characterized in that** the hot exhaust gas from the thermal production process or material treatment process (7, 32) and/or the hot exhaust gas from the further thermal production process or material treatment process (32, 7) are conducted via a gas mixing device (35) prior to being introduced into the thermal processing device (1).

12. The method according to one of the preceding claims, **characterized in that** a heating gas from a separate burner device (23) is introduced as needed into the thermal processing device (1) for thermally processing the waste products (3), in particular for starting the thermal processing.

13. The method according to one of the preceding claims, **characterized in that** a temperature of a combustion flue gas resulting from predominantly burning the organic components is increased compared to a temperature of the introduced, hot exhaust gas from the thermal production process or material treatment process (7, 32) by burning the organic impurities in the thermal processing device (1).

14. The method according to one of the preceding claims, **characterized in that** a processing exhaust gas resulting from the thermal processing of the waste products (3) is introduced at least partially into the thermal production process or material treatment process (7, 32) of the coordinated process plant (8) and/or into a further thermal process (32, 7) of the coordinated process plant (8) and/or into a thermal process of a further coordinated process plant (43).

15. The method according to claim 14, **characterized in that** the processing exhaust gas resulting from the thermal processing of the waste products (3) is conducted via a filtering device (28) prior to being introduced into the thermal production process or material treatment process (7, 32) of the coordinated process plant (8) or in the further thermal process (32, 7) of the coordinated process plant or in the thermal process of a further coordinated process plant (43).

16. The method according to one of the preceding claims, **characterized in that** a hot exhaust gas from a thermal process (7) of a coordinated process plant (8), in which thermal process (7) materials are burnt, is introduced into the thermal processing device (1).

17. The method according to one of the preceding claims, **characterized in that** a hot exhaust gas from a thermal rotary kiln process (11) of a coordinated cement clinker production plant (10) and/or a hot exhaust gas from a thermal calcination process (33) of the coordinated cement clinker production plant (10) upstream of the rotary kiln process (11) is introduced into the thermal processing device (1).

18. The method according to claim 17, **characterized in that** a processing exhaust gas resulting from the thermal processing of the waste products (3) is introduced into the thermal rotary kiln process (11) and/or the thermal calcination process (33) upstream of the rotary kiln process (11).

19. The method according to one of the preceding claims, **characterized in that** processing exhaust gas resulting from the thermal processing of the waste products (3) is discharged at least partially via an existing exhaust gas discharge device (29) of the coordinated process plant (8).

## Revendications

1. Procédé de récupération de matériaux (2) à partir de déchets (3),
ces déchets (3) comprenant des impuretés organiques,
dans lequel les déchets (3) sont soumis à un traitement thermique dans un dispositif de traitement thermique (1), les impuretés étant pyrolysés et/ou brûlés au moins en grande partie pendant ce traitement thermique,
dans lequel les déchets sont introduits dans une zone d'alimentation (5) dans une chambre de réaction (9) et les matériaux, ainsi que, le cas échéant, les résidus de pyrolyse et/ou de combustion sont évacués dans une zone de décharge (6) hors de la chambre de réaction (9),
**caractérisé en ce que**
dans le dispositif de traitement thermique (1) pour le traitement thermique des déchets (3), est introduit un gaz d'échappement chaud provenant d'au moins un processus de production ou d'un processus de traitement de matériaux thermique (7, 32) d'une installation de processus (8) disposée à côté,
dans lequel une température maximale dans une chambre de réaction (9) du dispositif de traitement thermique (1) pendant le traitement thermique est choisie de sorte que les matériaux à récupérer existent, pendant le traitement thermique, sous la forme d'un agrégat solide.

2. Procédé selon la revendication 1, **caractérisé en ce que** le gaz d'échappement chaud est introduit, pendant le traitement thermique des déchets (3) à contre-courant par rapport à une direction de passage (13) pour les déchets (3) dans une chambre de réaction (9) du dispositif de traitement thermique (1) ou dans une chambre de chauffage (18) pour la chambre de réaction (9).

3. Procédé selon la revendication 1, **caractérisé en ce que** le gaz d'échappement chaud est introduit, pendant le traitement thermique des déchets (3), dans la même direction qu'une direction de passage (13) pour les déchets (3), dans une chambre de réaction (9) du dispositif de traitement thermique (1) ou dans une chambre de chauffage (18) pour la chambre de réaction (9).

4. Procédé selon l'une des revendications précédentes, **caractérisé en ce que**, pour le traitement thermique des déchets (3), de l'air frais est introduit dans une chambre de réaction (9) du dispositif de traitement thermique (1) pendant le traitement thermique des déchets (3).

5. Procédé selon l'une des revendications précédentes, **caractérisé en ce que**, pour le traitement thermique des déchets (3), de l'air frais est ajouté au gaz d'échappement chaud avant l'introduction dans une chambre de réaction (9) du dispositif de traitement thermique (1).

6. Procédé selon la revendication 5, **caractérisé en ce que** le gaz d'échappement chaud et l'air frais sont mélangés avant l'introduction dans la chambre de réaction (9) dans un dispositif de mélange de gaz (35).

7. Procédé selon l'une des revendications 4 à 6, **caractérisé en ce qu'**une quantité d'oxygène introduite dans la chambre de réaction (9) par unité de temps et/ou une température dans la chambre de réaction (9) pendant le traitement thermique des déchets (3) est influencée par la quantité d'air frais introduite par unité de temps.

8. Procédé selon l'une des revendications précédentes, **caractérisé en ce qu'**une température du gaz d'échappement chaud est réglée, avant son introduction dans le dispositif de traitement thermique (1), plus particulièrement au moyen d'un échangeur thermique (21) ou par l'introduction d'air frais, en fonction des besoins concernant les déchets (3) à traiter.

9. Procédé selon l'une des revendications précédentes, **caractérisé en ce qu'**une quantité d'énergie introduite par unité de temps dans le dispositif de traitement thermique (1) est influencée par la quantité de gaz d'échappement introduite dans le dispositif de traitement thermique (1).

10. Procédé selon l'une des revendications précédentes, **caractérisé en ce que**, dans le dispositif de traitement thermique (1) pour le traitement thermique des déchets (3), est introduit un gaz d'échappement chaud provenant d'un autre processus de production thermique ou d'un processus de traitement de matériaux (32, 7) de l'installation de processus (8) disposée à côté.

11. Procédé selon la revendication 10, **caractérisé en ce que** le gaz d'échappement chaud est guidé hors du processus de production thermique ou du processus de traitement de matériaux (7, 32) et/ou le gaz d'échappement chaud est guidé hors de l'autre processus de production thermique ou processus de traitement de matériaux (32, 7) avant l'introduction dans le dispositif de traitement thermique (1) par l'intermédiaire d'un dispositif de mélange de gaz (35).

12. Procédé selon l'une des revendications précédentes, **caractérisé en ce que**, dans le dispositif de traitement thermique (1) pour le traitement thermique des déchets (3) est introduit, selon les besoins, plus particulièrement pour le démarrage du traitement thermique, un gaz de chauffage provenant d'un dispositif à brûleur séparé (23).

13. Procédé selon l'une des revendications précédentes, **caractérisé en ce qu'**une température d'un gaz d'échappement de combustion provenant d'une combustion des composants organiques est augmentée par rapport à une température du gaz d'échappement chaud provenant du processus de production thermique ou du processus de traitement de matériaux (7, 32) par la combustion des impuretés organiques dans le dispositif de traitement thermique (1).

14. Procédé selon l'une des revendications précédentes, **caractérisé en ce qu'**un gaz d'échappement de traitement dégagé par le traitement thermique des déchets (3) est introduit au moins partiellement dans le processus de production ou le processus de traitement de matériaux (7, 32) de l'installation de processus (8) disposée à côté et/ou dans un autre processus thermique (32, 7) de l'installation de processus (8) disposée à côté et/ou dans un processus thermique d'une autre installation de processus (43) disposée à côté.

15. Procédé selon la revendication 14, **caractérisé en ce que** le gaz d'échappement de traitement dégagé par le traitement thermique des déchets (3) est guidé, avant l'introduction dans le processus de production thermique ou le processus de traitement de matériaux (7, 32) de l'installation de processus (8) disposée à côté ou dans l'autre processus thermique (32, 7) de l'installation de processus disposée à côté ou dans le processus thermique d'une autre installation de processus (43) disposée à côté, par l'intermédiaire d'un dispositif de filtrage (28).

16. Procédé selon l'une des revendications précédentes, **caractérisé en ce que**, dans le dispositif de traitement thermique (1) est introduit un gaz d'échappement chaud provenant d'un processus thermique (7) d'une installation de processus (8) disposée à côté, des matériaux étant brûlés dans ce processus thermique (7).

17. Procédé selon l'une des revendications précédentes, **caractérisé en ce que**, dans le dispositif de traitement thermique (1) est introduit un gaz d'échappement chaud provenant d'un processus thermique à four tubulaire rotatif (11) d'une installation de production de clinker de ciment (10) disposée à côté et/ou un gaz d'échappement chaud provenant d'un processus de calcination thermique (33) en amont du processus thermique à four tubulaire rotatif (11) de l'installation de production de clinker de ciment (10) disposée à côté.

18. Procédé selon la revendication 17, **caractérisé en ce qu'**un gaz d'échappement de traitement dégagé par le traitement thermique des déchets (3) est introduit dans le processus thermique à four tubulaire rotatif (11) et/ou dans le processus de calcination thermique (33) en amont du processus thermique à four tubulaire rotatif (11).

19. Procédé selon l'une des revendications précédentes, **caractérisé en ce qu'**un gaz d'échappement de traitement dégagé par le traitement thermique des déchets (3) est évacué au moins partiellement par l'intermédiaire d'un dispositif d'évacuation de gaz d'échappement (29) existant de l'installation de processus (8) disposée à côté.
